# EUROPEAN PATENT SPECIFICATION

(11) **EP 3 604 621 B1**
(45) Date of publication and mention of the grant of the patent: **01.03.2023**
(21) Application number: 18777876.6
(22) Date of filing: 30.03.2018
(51) Int. Cl.: C25B 15/08, C25B 1/04, C25B 9/19, C25B 9/73, C25B 9/77

(54) **OUTER HEADER-TYPE BIPOLAR ELECTROLYZER, AND HYDROGEN PRODUCTION METHOD**
BIPOLARER ELEKTROLYSEUR MIT ÄUSSEREN KOPF UND WASSERSTOFFHERSTELLUNGSVERFAHREN
ELECTROLYSEUR BIPOLAIRE DE TYPE COLLECTEUR EXTERIEUR ET PROCÉDÉ DE PRODUCTION D'HYDROGÈNE

(30) Priority: 31.03.2017 JP 2017072967
(43) Date of publication of application: 05.02.2020
(73) Proprietor: ASAHI KASEI KABUSHIKI KAISHA, Tokyo 100-0006 (JP)
(72) Inventor: HOTTA Shinya, Tokyo 100-0006 (JP); KOMURA Ryo, Tokyo 100-0006 (JP)
(74) Representative: dompatent von Kreisler Selting Werner - Partnerschaft von Patent- und Rechtsanwälten mbB
(86) International application number: PCT/JP2018/013948
(87) International publication number: WO 2018/182004

(56) References cited:
- WO-A1-2013/191140
- JP-A- H06 200 392
- JP-A- H09 157 877
- JP-A- 2012 158 775
- JP-A- 2012 158 775
- US-A- 4 465 579
- US-A- 4 705 614
- US-A- 5 242 564

## Description

### TECHNICAL FIELD

The present disclosure relates to an outer header type bipolar electrolyzer comprising an outer header type bipolar element, and a hydrogen production method.

### BACKGROUND

In recent years, techniques utilizing renewable energy, such as wind power generation and photovoltaic power generation, have attracted attention in order to solve the issues including global warming due to greenhouse gases such as carbon dioxide, decrease of fossil fuel reserves, and so on.

The renewable energy has the property of very largely fluctuating because its output depends on climatic conditions. Thus, it is not always possible to transport electric power obtained by electricity generation utilizing renewable energy to the general electric power system, and there is concern about social influences such as imbalance of electricity supply and demand, destabilization of electric power system, and so on.

Therefore, research has been conducted to convert the electric power generated from renewable energy into a form suitable for storage and transportation and utilize this form. Specifically, study has been made on how to generate storable and transportable hydrogen by electrolysis of water using the electric power generated from renewable energy, and to use hydrogen as an energy source or material.

Hydrogen is widely used in the industrial fields of, for example, petroleum refining, chemical synthesis, and metal refining. In recent years, there has also been an increase in applicability of hydrogen in hydrogen stations for fuel cell vehicles (FCVs), smart communities, and hydrogen power plants, and so on. Accordingly, there is high expectation for the development of technology to obtain, in particular, high-purity hydrogen from renewable energy.

Methods for electrolysis of water include solid polymer electrolyte water electrolysis, high-temperature steam electrolysis, and alkaline water electrolysis. Of these, alkaline water electrolysis is regarded as one of the most promising because of its industrialization over decades, large-scale availability, inexpensiveness as compared to other water electrolysis devices, and so on.

In a system employed in alkaline water electrolysis, the generated gas and the electrolyte discharged from an electrolytic cell have been conventionally taken out from the same single discharge port (see Patent Literature 1). However, there is certainly a growing demand for improved gas-liquid separation, and in addition, there has also been a demand for a more compact electrolytic cell.

US 5,242,564 discloses an outer header type bipolar element for alkaline water electrolysis, said bipolar element comprising: electrodes including an anode and a cathode; a partition wall that separates the cathode and the anode; and a discharge port that discharges an electrolyte containing gas generated at the electrode, wherein said bipolar element has a plurality of discharge ports, in a region sandwiched between the anode or the cathode and the partition wall and they are Provided in two different positions in vertical direction. The gas-rich electrolyte is discharged from the higher positioned discharge part and the liquid-rich electrolyte from the lower one, they are both combined into electrolyte collector above the discharge port.

### CITATION LIST

### Patent Literature

PTL 1: Japanese Patent Application Laid-Open No. 2012-158775

### SUMMARY

### (Technical Problem)

Accordingly, an objective of the present disclosure is to provide an outer header type bipolar element for alkaline water electrolysis that can simultaneously achieve gas-liquid separation and reduction of the thickness of the entire electrolytic cell.

### (Solution to Problem)

Therefore, as a result of intensive studies, the inventors found that it is possible to provide an outer header type bipolar element for alkaline water electrolysis that can simultaneously achieve gas-liquid separation and reduction of the thickness of the entire electrolytic cell by arranging a plurality of discharge ports for discharging the gas generated at an electrode and an electrolyte. In this manner, the inventors completed the present disclosure.

The present invention and its preferred embodiments are apparent from the appendant set of claims.

According to the present disclosure, it is possible to provide an outer header type bipolar element for alkaline water electrolysis that can simultaneously achieve gas-liquid separation and reduction of the thickness of the entire electrolytic cell.

### BRIEF DESCRIPTION OF THE DRAWINGS

In the accompanying drawings:
FIG. 1 is a side view illustrating the whole of one example of an outer header type bipolar electrolyzer for alkaline water electrolysis of the present embodiment;
FIG. 2 is a cross-sectional view of a zero-gap structure part inside the electrolytic cell in the square frame part enclosed by a broken line in FIG. 1;
FIG. 3 is a perspective view illustrating a bipolar element, a header (hose), and a conduit, which are a part of one example of an outer header type bipolar electrolyzer for alkaline water electrolysis of the present embodiment;
FIG. 4 is a perspective view illustrating the flow of an electrolyte in a part of one example of an outer header type bipolar electrolyzer for alkaline water electrolysis of the present embodiment;
FIG. 5 is a side view illustrating a part of one example of an outer header type bipolar electrolyzer for alkaline water electrolysis of the present embodiment;
FIG. 6 illustrates a part of a cross section obtained by cutting by a plane along the line A-A in FIG. 5;
FIG. 7 illustrates one example of a connection between a conduit and a header (hose) in an outer header type bipolar electrolyzer for alkaline water electrolysis of the present embodiment;
FIG. 8 illustrates an outline of an electrolysis device of the present embodiment; and
FIG. 9 illustrates one example of a connection of an electrolyte outlet (discharge port), a header (hose), and a conduit in an outer header type bipolar electrolyzer for alkaline water electrolysis of the present embodiment.

### DETAILED DESCRIPTION

The following provides a detailed description of an embodiment of this disclosure (hereinafter, referred to as "the present embodiment").

The following provides a detailed description of components of a bipolar element of the present embodiment, a bipolar electrolyzer including a bipolar element of the present embodiment, and a hydrogen production method. In the following, a preferred embodiment for enhancing the effect of what is disclosed is also described in detail.

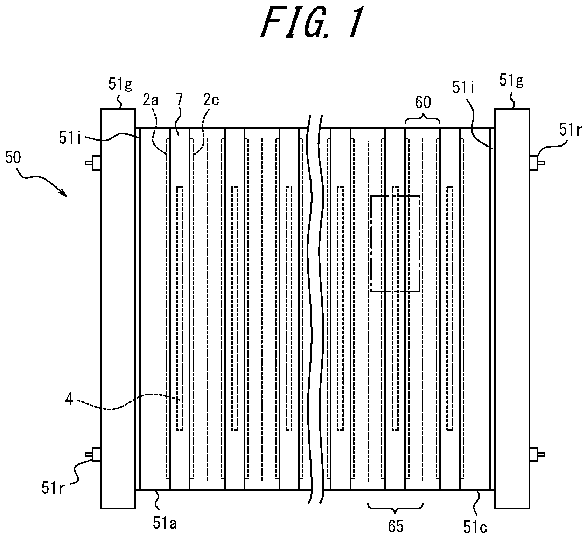

FIG. 1 is a side view illustrating the whole of one example of an outer header type bipolar electrolyzer for alkaline water electrolysis of the present embodiment.

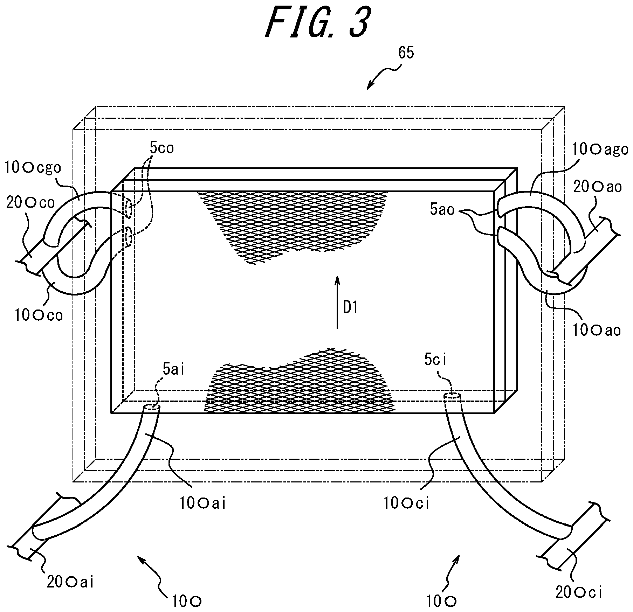

FIG. 3 is a perspective view illustrating a bipolar element, a header (hose), and a conduit, which are a part of one example of an outer header type bipolar electrolyzer for alkaline water electrolysis of the present embodiment.

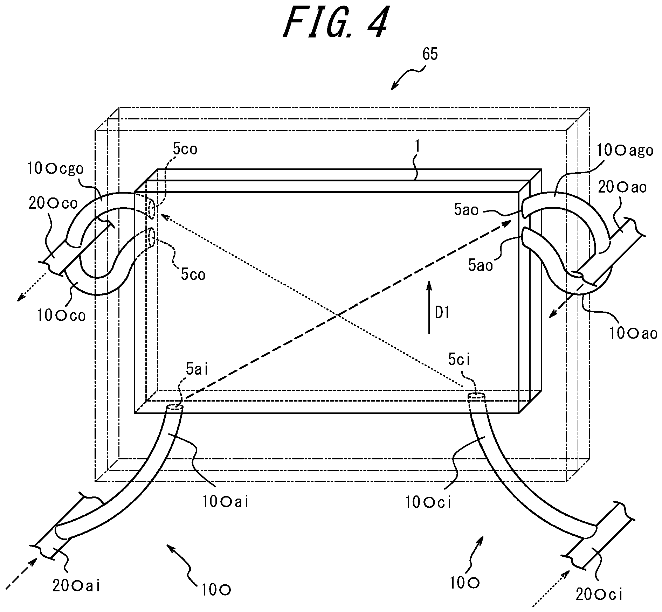

FIG. 4 is a perspective view illustrating the flow of an electrolyte in a part of one example of an outer header type bipolar electrolyzer for alkaline water electrolysis of the present embodiment.

As illustrated in FIG. 1, a bipolar electrolyzer for alkaline water electrolysis 50 of the present embodiment is a bipolar electrolyzer 50 comprising a plurality of bipolar elements 60 overlapped one another with a membrane 4 interposed therebetween, wherein each bipolar element 60 comprises an anode 2a, a cathode 2c, a partition wall 1 separating the anode 2a and the cathode 2c, and an outer frame 3 bordering the partition wall 1.

### (Bipolar electrolyzer)

A bipolar type is one of methods to connect a number of bipolar elements to a power source, in which a plurality of bipolar elements 60, each of which has an anode 2a on one side and a cathode 2c on the other side, are arranged in the same orientation and are connected in series, and only the two ends are connected to a power source.

The bipolar electrolyzer 50 is characterized in that the current from the power source can be reduced, and therefore a large quantity of gas, a certain material, or the like can be produced in a shorter time by electrolysis. Bipolar electrolyzers are more preferred than monopolar electrolyzers for industrial applications because constant-current and high-voltage power source facilities are less expensive and more compact than other power source facilities having the same output.

### ((Bipolar element))

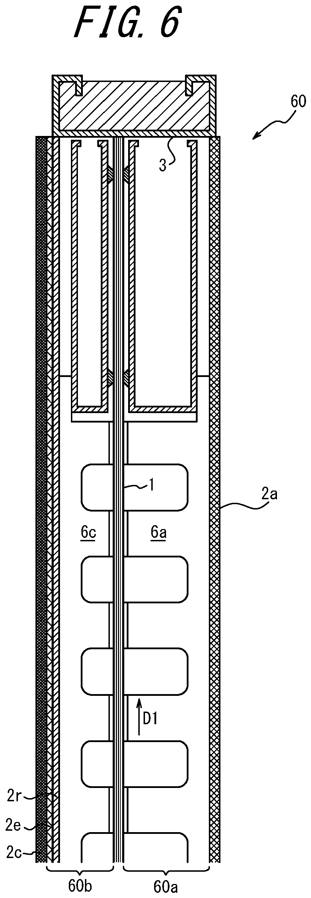

A bipolar element 60 used in one example of a bipolar electrolyzer for alkaline water electrolysis 50 comprises a partition wall 1 separating an anode 2a and a cathode 2c, and an outer frame 3 bordering the partition wall 1 as illustrated FIG. 6. More specifically, the partition wall 1 is conductive, and the outer frame 3 is provided so as to surround the partition wall 1 along the outer circumference of the partition wall 1.

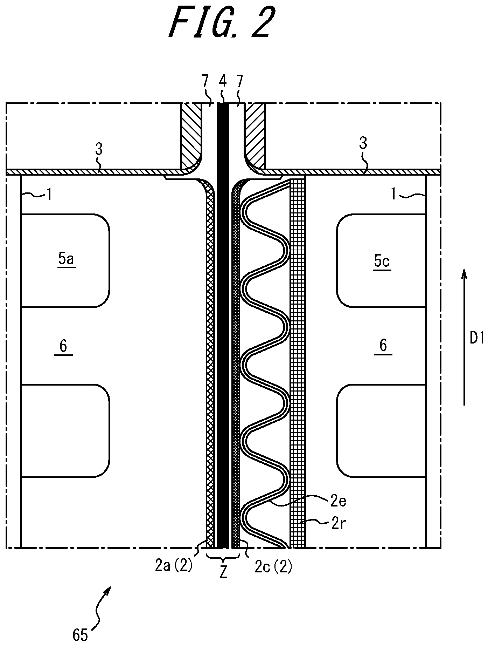

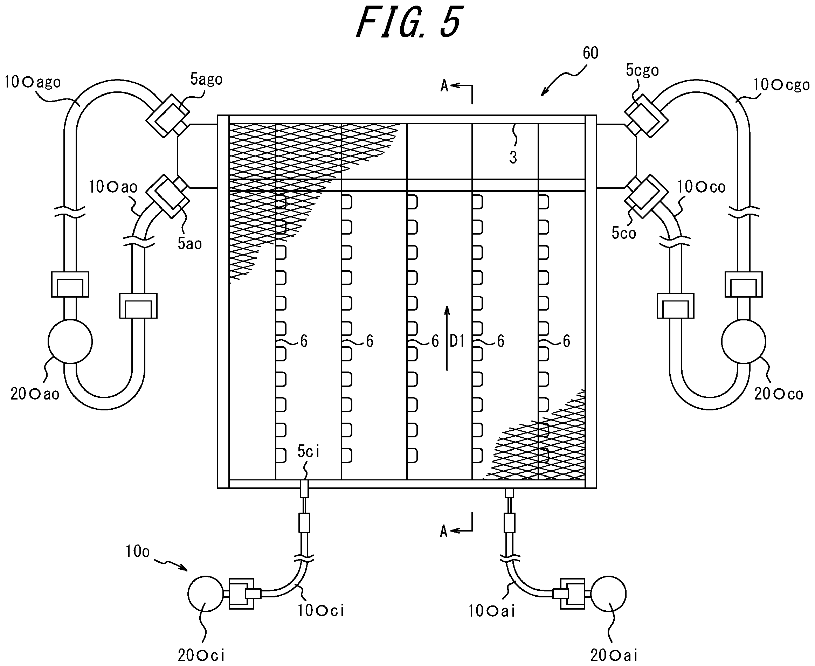

Note that in the present embodiment, the bipolar element 60 may usually be used so that the given direction D1 along the partition wall 1 is the vertical direction, specifically, so that when the plan-view shape of the partition wall 1 is rectangular as illustrated in FIGS. 2 to 6, the given direction D1 along the partition wall 1 is the same direction as the direction of one of two opposing pairs of sides.

The outer header type bipolar element for alkaline water electrolysis 60 of the present embodiment (that may be simply referred to as the "bipolar element" in the present specification) comprises electrodes 2 including an anode 2a and a cathode 2c; a partition wall 1 that separates the cathode 2c and the anode 2a; and a discharge port (electrolyte outlet) that discharges an electrolyte containing gas generated at the electrode 2, and the bipolar element has a plurality of the discharge ports in a region sandwiched between the anode or the cathode and the partition wall.

As the region, there are a region 60a sandwiched between the anode and the partition wall (that may be referred to as a "region A" in the present specification) and a region 60b sandwiched between the cathode and the partition wall (that may be referred to as a "region B" in the present specification) (FIG. 6).

Conventionally, when an electrolyte containing gas generated at an electrode is discharged from a bipolar element, the gas accumulates in the vicinity of a discharge port, whereby the flow of the electrolyte may stagnate. In particular, when the bipolar element becomes thinner, gas is more likely to accumulate in the vicinity of the discharge port. Because of that, it has been difficult to reduce the thickness of the bipolar element so far.

According to the bipolar element of the present embodiment, since a plurality of discharge ports are provided in the region A and the region B, gas hardly accumulates in the vicinity of the discharge port, and the gas and the electrolyte are separated with the plurality of discharge ports. Thus, the electrolyte can be circulated efficiently. Furthermore, the temperature of the membrane is unlikely to increase even when a long-term continuous operation is performed. In particular, this effect becomes more remarkable when the bipolar element is thinned.

In the bipolar element of the present embodiment the plurality of discharge ports provided in each region are provided at different positions in the vertical direction. However, it is more preferable that all the discharge ports are provided at different positions in the vertical direction so that the gas generated from the electrode and the electrolyte are more easily separated at the discharge port, and the electrolyte circulates more efficiently.

The positions where the plurality of discharge ports are provided may be the same or may be different in the vertical direction between the region A and the region B.

In the present embodiment the discharge ports are provided at different positions in the vertical direction, it is preferable that the vertical lower end of the discharge port at the highest position in the vertical direction is vertically above the vertical upper end of the discharge port at the lowest position in the vertical direction, and it is more preferable that the distance between the vertical lower end of the discharge port at the highest position in the vertical direction and the vertical upper end of the discharge port at the lowest position in the vertical direction is 10 mm or more from a viewpoint of further improving gas-liquid separation at the discharge port.

In the bipolar element of the present embodiment the number of the discharge ports provided in each region is two or more and can be three or more (for example, three) depending on the discharge amount of the electrolyte. Among these, the number of the discharge ports is most preferably two from a viewpoint of ease of manufacture.

The number of the discharge ports may be different or may be the same between the region A and the region B. However, in the region A and in the region B, it is preferable that the same number of two or more discharge ports are provided, and it is more preferable that two discharge ports are provided from a viewpoint of ease of manufacturing the bipolar element.

In the bipolar element of the present embodiment the gas generated at the electrode is preferably discharged from the discharge port at the highest position in the vertical direction. For example, when two discharge ports are provided in the region, the gas is preferably discharged from a discharge port at a high position in the vertical direction.

In particular, it is preferable that the gas generated at the electrode is discharged only from the discharge port at the highest position in the vertical direction, and only the electrolyte is discharged from the discharge port at the lowest position in the vertical direction. For example, when two discharge ports are provided in the region, it is preferable that only the gas is discharged from the discharge port at the vertical upper position, and only the electrolyte is discharged from the discharge port at the vertical lower position.

In the present embodiment (for example, the embodiments [1] to [18] described above), the cross-sectional area of the discharge port is preferably 1.25 x 10⁻⁵ m² or more, and more preferably 2.83 × 10⁻⁵ m² or more so that the gas-liquid separation between the gas and the electrolyte at the discharge port is further improved, a sufficient flow rate of the circulating electrolyte is ensured, and the temperature of the membrane is unlikely to increase even when a long-term continuous operation is performed. In addition, the cross-sectional area of the discharge port is preferably 7.85 × 10⁻⁵ m² or less, and more preferably 5.03 × 10⁻⁵ m² or less.

The plurality of the discharge ports in each region may have the same or different cross-sectional areas. In particular, it is preferable that all the discharge ports have the same cross-sectional area from a viewpoint of ease of manufacture. Further, it is preferable that at least one discharge port satisfies the above, and it is more preferable that all the discharge ports satisfy the above.

In the present embodiment examples of the shape of the discharge port include a nearly circular shape and a nearly polygonal shape, but are not restricted thereto. When the shape of the discharge port is a nearly circular shape, the inner diameter of the discharge port is preferably 4 mm or more, and more preferably 6 mm or more. In addition, the inner diameter of the discharge port is preferably 16 mm or less, more preferably 10 mm or less, and still more preferably 8 mm or less.

The shape and/or inner diameter of the discharge port may be the same or different in all the discharge ports. Further, it is preferable that at least one discharge port satisfies the above, and it is more preferable that all the discharge ports satisfy the above.

In the present embodiment (for example, the embodiments [1] to [18] described above), the thickness of the bipolar element is preferably 50 mm or less, more preferably less than 50 mm, still more preferably 15 mm or more and 40 mm or less, and particularly preferably 20 mm or more and 35 mm or less from a viewpoint of a more compact electrolyzer. The thickness of the bipolar element can be adjusted by, for example, the cross-sectional area of the discharge port.

Note that the thickness of the bipolar element refers to the distance between the anode and the cathode provided across the partition wall (the distance from the anode outer end to the cathode outer end).

In the present embodiment (for example, the embodiments [1] to [18] described above), the relationship D/T between the inner diameter D (mm) of the discharge port and the thickness T (mm) of the bipolar element is preferably 0.1 or more, more preferably 0.15 or more, and still more preferably 0.2 or more from a viewpoint of realizing the gas-liquid separation at the discharge port of the bipolar element and the reduction of the thickness of the entire electrolytic cell at a higher level. In addition, the relationship D/T is preferably 0.9 or less, and more preferably 0.4 or less.

Here, the inner diameter of the discharge port refers to the longest distance among the distances between any two points inside the discharge port.

According to the present embodiment in the above-described bipolar element, the number of an electrolyte inlet for introducing the electrolyte is preferably one for each region. In particular, it is preferable to provide one electrolyte inlet and a plurality of discharge ports (electrolyte outlets) from a viewpoint of efficiently circulating the electrolyte.

For example, it is preferable that in the region A, one anode electrolyte inlet 5ai and a plurality of anode electrolyte outlets 5ao are provided, and in the region B, one cathode electrolyte inlet 5ci and a plurality of cathode electrolyte outlets 5co are provided.

According to the present embodiment in the above-described bipolar element, the inclination θ1 of the discharge port at the highest position in the vertical direction is preferably 0° or more and 90° or less, more preferably 10° or more and 90° or less, and still more preferably 15° or more and 75° or less in the vertical direction with respect to the horizontal direction from a viewpoint of further improving the gas-liquid separation at the discharge port.

In addition, according to the present embodiment the inclination θ2 of the discharge port at the lowest position in the vertical direction is preferably -90° or more and -10° or less and more preferably -75° or more and -15° or less, and may be -90° or more and 0° or less in the vertical direction with respect to the horizontal direction from a viewpoint of further improving the gas-liquid separation at the discharge port.

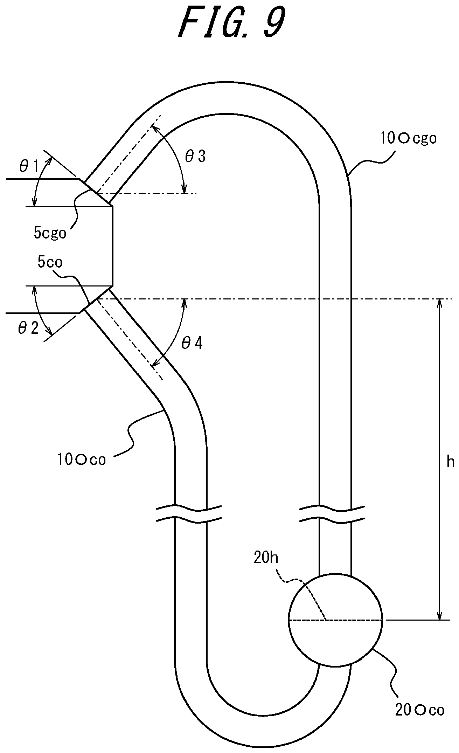

Here, the inclination of the discharge port refers to the angle between the straight line connecting the two outer ends of the discharge port that form the longest line segment in the vertical cross section of the bipolar element (the plane parallel to the partition wall) and the horizontal direction (FIG. 9). Here, in the present specification, an angle in the vertically upward direction with respect to the horizontal direction is defined as a positive angle, and an angle in the vertically downward direction (the gravity direction, the direction toward the center of the earth) with respect to the horizontal direction is defined as a negative angle. In the present specification, the horizontal direction refers to the direction of the surface perpendicular to the vertical direction.

In the present embodiment the position of the bipolar element at which the discharge port is provided is preferably set, for example, between the vertical upper end of the bipolar element and the vertical center of the electrode or the partition wall, more preferably set in up to 30% of the vertical length from the vertical upper end to the electrode or the partition wall, and more preferably set in up to 15% of the vertical length from the vertical upper end to the electrode or the partition wall. Further, it is preferable that the discharge port is provided in a surface other than the surface in which the electrode of the bipolar element is provided (for example, the vertical upper end surface, horizontal both end surfaces). Note that the position at which the discharge port is provided refers to the position of the vertical center of the discharge port.

The position at which the discharge port is provided may be different or may be the same between the region A and the region B. Further, it is preferable that at least one discharge port satisfies the above, and it is more preferable that all the discharge ports satisfy the above.

The outer header type bipolar electrolyzer of the present embodiment (that may be simply referred to as the "bipolar electrolyzer" in the present specification) includes the above-described outer header type bipolar element (preferably outer header type bipolar element for alkaline water electrolysis).

In the present embodiment, as illustrated in FIG. 1, the bipolar electrolyzer 50 is constructed by stacking the required number of bipolar elements 60.

In one example of the bipolar electrolyzer 50 illustrated in FIG. 1, a fast head 51g, an insulating plate 51i, and an anode terminal element 51a are arranged in order from one end, and an anode side gasket part 7, a membrane 4, a cathode side gasket part 7, and a bipolar element 60 are further arranged side by side in this order. In this case, the bipolar element 60 is arranged so that the cathode 2c faces toward the anode terminal element 51a side. Components including from the anode side gasket part 7 to the bipolar element 60 are repeatedly arranged as many times as required for the designed production quantity. After components including from the anode side gasket part 7 to the bipolar element 60 are repeatedly arranged as many times as required, the anode side gasket part 7, the membrane 4, and the cathode side gasket part 7 are arranged side by side again, and finally a cathode terminal element 51c, an insulating plate 51i, and a loose head 51g are arranged in this order. The entire components are integrated by tightening with a tie rod mechanism 51r (see FIG. 1) or a clamping mechanism such as one employing an oil-hydraulic cylinder to provide the bipolar electrolyzer 50.

The arrangement configuring the bipolar electrolyzer 50 can be arbitrarily selected from either the anode 2a side or the cathode 2c side and is not limited to the above order.

As illustrated in FIG. 1, in the bipolar electrolyzer 50, the bipolar elements 60 are disposed between the anode terminal element 51a and the cathode terminal element 51c. The membranes 4 are arranged between the anode terminal element 51a and the bipolar element 60, between two adjacent bipolar elements 60, and between the bipolar element 60 and the cathode terminal element 51c.

In the bipolar electrolyzer 50 according to the present embodiment, as illustrated in FIG. 2, the partition wall 1, the outer frame 3, and the membrane 4 define an electrode compartment 5 through which an electrolyte pass. Here, the region A60a sandwiched between the anode and the partition wall refers to a region in the anode compartment, and the region B60b sandwiched between the cathode and the partition wall refers to a region in the cathode compartment. When a plurality of elements are overlapped one another with a membrane interposed therebetween, it is preferable that a plurality of the discharge ports are provided in each of the anode compartment and the cathode compartment.

In the present embodiment, particularly, a section between the partition walls 1 of two adjacent bipolar elements 60 and a section between the partition wall 1 of a terminal element and the partition wall 1 of the adjacent bipolar element 60 in the bipolar electrolyzer 50 are referred to as electrolytic cells 65 (FIG. 1). Each electrolytic cell 65 includes a partition wall 1, an anode compartment 5a, and an anode 2a of one element; a membrane 4; and a cathode 2c, a cathode compartment 5c, and a partition wall 1 of the other element.

Specifically, the electrode compartment 5 includes an electrolyte inlet 5i for introducing an electrolyte to the electrode compartment 5, and an electrolyte outlet for derivating the electrolyte from the electrode compartment 5, at a boundary to the outer frame 3. Note that in the present specification, the electrolyte outlet corresponds to the discharge port described above. More specifically, the anode compartment 5a is provided with an anode electrolyte inlet 5ai for introducing the electrolyte to the anode compartment 5a, and anode electrolyte outlets 5ao and 5ago for taking out the electrolyte took out (drained, discharged) from the anode compartment 5a. Similarly, the cathode compartment 5c is provided with a cathode electrolyte inlet 5ci for introducing the electrolyte to the cathode compartment 5c, and a cathode electrolyte outlets 5co and 5cgo for taking out the electrolyte took out (drained, discharged) from the cathode compartment 5c.

In the present embodiment, an internal distributor for uniformly distributing the electrolyte within the electrode surface inside the electrolyzer 50 may be provided in the anode compartment 5a and the cathode compartment 5c. In addition, the electrode compartment 5 may be provided with a baffle plate having a function of restricting the flow of liquid inside the electrolyzer 50. Further, in the anode compartment 5a and the cathode compartment 5c, a protrusion for generating a Karman vortex may be provided in order to uniform the concentration and temperature of the electrolyte inside the electrolyzer 50, and to promote the defoaming of gas adhering to the electrode 2 or the membrane 4.

The bipolar electrolyzer 50 in the present embodiment comprises a header that communicates with the electrode compartment 5 outside the outer frame 3 (see FIGS. 3 to 5).

In one example illustrated in FIGS. 3 and 4, a header (hose), which is a pipe for distributing or collecting gas or an electrolyte, is attached to the bipolar element. Specifically, the headers includes an inlet header for introducing an electrolyte from the distributing pipe into the electrode compartment 5 and an outlet header for discharging gas or an electrolyte from the electrode compartment 5 to the collecting pipe.

In one example, below the outer frame 3 at the edge of the partition wall 1, an anode inlet header 10Oai for introducing an electrolyte into the region A (a part of the anode compartment 5a) and an cathode inlet header 10Oci for introducing an electrolyte into the region B (a part of the cathode compartment 5c) are provided. Similarly, above the outer frame 3 at the edge of the partition wall 1, anode outlet headers 10Oao and 10Oago for discharging an electrolyte and gas from the region A and cathode outlet headers 10Oco and 10Ocgo for discharging an electrolyte and gas from the region B are provided. Since the bipolar element of the present embodiment has a plurality of discharge ports (electrolyte outlets), it is connected to a plurality of outlet headers.

Further, in one example, the inlet header and the outlet header are provided so as to face each other across the central part of each region (the central part of the electrode compartment 5) in the region A (a part of the anode compartment 5a) and the region B (a part of the cathode compartment 5c).

In particular, an outer header 10O type bipolar element in which the bipolar electrolyzer 50 and the header are independent is employed in the bipolar electrolyzer 50 of this example.

One example of an outer header type bipolar electrolyzer for alkaline water electrolysis of the present embodiment is illustrated in FIG. 4.

Further, in one example illustrated in FIGS. 3 and 4, a conduit 20, which is a pipe for collecting a distributed or collected gas or electrolyte, is attached to the header. Specifically, the conduits includes a distributing pipe that communicates with the inlet header and a collecting pipe that communicates with the outlet header.

In one example, below the outer frame 3, an anode distributing pipe 20Oai that communicates with the anode inlet header 10Oai and a cathode distributing pipe 20Oci that communicates with the cathode inlet header 10Oci are provided. Similarly, beside the outer frame 3, an anode collecting pipe 20Oao that communicates with the anode outlet headers 10Oao and 10Oago and a cathode collecting pipe 20Oco that communicates with the cathode outlet headers 10Oco and 10Ocgo are provided.

Here, when a plurality of discharge ports (electrolyte outlets) are provided, the discharge port at the highest position in the vertical direction among the anode electrolyte outlets 5ao may be Sago, and the discharge port at the highest position in the vertical direction among the cathode electrolyte outlets 5co may be 5cgo. In addition, of the outlet hoses (outlet headers) 10Oao and 10Oco that extend from the electrolyte outlets 5ao and 5co respectively, the outlet hoses (outlet headers) that extend from the discharge ports 5ago and 5cgo at the highest position in the vertical direction may be 10Oago and 10Ocgo respectively.

The discharge ports 5ago and 5cgo at the highest positions in the vertical direction are preferably discharge ports that discharge a larger amount of gas than the amount of gas discharged from the discharge port at the lowest position in the vertical direction. In addition, the discharge ports 5ago and 5cgo at the highest positions in the vertical direction are preferably discharge ports that discharge a smaller amount of the electrolyte than the amount of the electrolyte discharged from the discharge port at the lowest position in the vertical direction. In this manner, the gas-liquid separation state in the collecting pipe is improved, and thus the gas-liquid separation efficiency in the gas-liquid separation tank can be improved. In particular, it is preferable that the amount of gas discharged from the discharge port at the highest position is 10 times or more larger than the amount of gas discharged from the discharge port at the lowest position. In addition, it is preferable that the amount of the electrolyte discharged from the discharge port at the highest position is 1/10 or less of the amount of the electrolyte discharged from the discharge port at the lowest position. Here, the amount of gas and the amount of the electrolyte refer to the total amount of gas and the total amount of the electrolyte flowing per unit time.

It is preferable that only gas is discharged from the outlet hoses (outlet headers) 10Oago and 10Ocgo that extend from the discharge ports 5ago and 5cgo at the highest positions in the vertical direction respectively.

According to the present embodiment in the anode compartment 5a and the cathode compartment 5c, the inlet header and the outlet header are preferably provided at separate positions, preferably provided so as to face each other across the central part of the electrode compartment 5 from a viewpoint of water electrolysis efficiency. When the plan-view shape of the partition wall 1 is rectangular as illustrated in FIGS. 3 and 4, it is preferable that the inlet header and the outlet header are provided with the center of the rectangle interposed therebetween.

One anode distributing pipe 20Oai, one cathode distributing pipe 20Oci, one anode collecting pipe 20Oao, and one cathode collecting pipe 20Oco are usually provided in each electrode compartment 5. However, in the present embodiment, no specific limitations are placed on them and they may be shared by a plurality of electrode compartments 5.

In the illustrated example, the partition wall 1 that is rectangular in plan view and the membrane 4 that is rectangular in plan view are arranged in parallel, and the inner surface on the partition wall 1 side of the rectangular parallelepiped outer frame provided on the edge of the partition wall 1 is perpendicular to the partition wall 1. Therefore, the shape of the electrode compartments 5 is a rectangular parallelepiped shape. However, in the present embodiment, the shape of the electrode compartment 5 is not limited to the rectangular parallelepiped shape of the illustrated example, and may be modified in accordance with the plan-view shape of the partition wall 1 or the membrane 4, the angle between the internal surface of the outer frame 3 on the partition wall 1 side and the partition wall 1, or the like. The electrode compartment 5 may have any shape as long as the effect of what is disclosed is obtained.

In the present embodiment no specific limitations are placed on the positional relationship between the electrode compartment 5 and the header. As illustrated in FIGS. 3 and 4, when the bipolar element 60 is used so that the given direction D1 along the partition wall 1 is the vertical direction, the inlet header may be below (as illustrated) or beside the electrode compartment 5, and the outlet header may be above (as illustrated) or beside the electrode compartment 5, as well as the distributing pipe communicating with the inlet header may be below (as illustrated) or beside the electrode compartment 5, and the collecting pipe communicating with the outlet header may be above (as illustrated) or beside the electrode compartment 5.

In the present embodiment no specific limitations are placed on the extension direction of the conduit. As one example illustrated in FIGS. 3 and 4, it is preferable that each of the distributing pipes (anode distributing pipe 20Oai, cathode distributing pipe 20Oci) and the collecting pipes (anode collecting pipe 20Oao, cathode collecting pipe 20Oco) extends in the direction perpendicular to the partition wall 1, and it is more preferable that every conduit extends in the direction perpendicular to the partition wall 1 from a viewpoint of easily obtaining the effect of what is disclosed.

Note that in the bipolar electrolyzer for alkaline water electrolysis 50 of the present embodiment, a plurality of flow rectifiers 6 (ribs) arranged in parallel to the given direction D1 along the partition wall 1 may be provided so that convection generated in the electrolytic compartment 5 due to turbulence of the gas-liquid flow in the electrolytic compartment 5 is reduced, and a locally rise in the temperature of the electrolyte is suppressed.

In the bipolar electrolyzer of the present embodiment, it is preferable that a plurality of the discharge ports and the electrolyte collecting pipes are connected through hoses (anode outlet headers 10Oao and 10Oago, cathode outlet headers 10Oco and 10Ocgo).

In the present embodiment the inclination θ3 of the hose at the discharge port at the highest position in the vertical direction may be 0° or more and 90° or less, preferably 10° or more and less than 90°, and more preferably 15° or more and 75° or less in the vertical direction with respect to the horizontal direction from a viewpoint of further improving the gas-liquid separation at the discharge port. In addition, the inclination θ4 of the hose at the discharge port at the lowest position in the vertical direction may be -90° or more and 0° or less, preferably more than -90°and -10° or less, and more preferably -75° or more and -15° or less in the vertical direction with respect to the horizontal direction from a viewpoint of further improving the gas-liquid separation at the discharge port.

Here, the inclination of the hose refers to the angle between the hose direction and the horizontal direction at the connection point of the discharge port and the hose in the vertical cross section of the bipolar element (a plane parallel to the partition wall) (FIG. 9). Specifically, the inclination of the hose refers to the angle between a line segment connecting the centers of the cross sections of the hose that is perpendicular to the flow direction of the electrolyte of the hose (for example, a line segment having a length of 1 mm from the connection point or a line segment connecting the center of the cross section of the hose at the connection point and the center of the cross section of the hose at a position 1 mm away from the connection point) and the horizontal direction.

According to the present embodiment in the bipolar electrolyzer, it is preferable that the electrolyte collecting pipe is provided vertically below the discharge port, and it is more preferable that the electrolyte collecting pipe is provided vertically below the discharge port at the lowest position in the vertical direction from a viewpoint of positioning the electrolyte, which is relatively heavy, on a lower side in order to improve the separation of gas generated by electrolysis and the electrolyte.

Specifically, the distance h between the vertical center of the discharge port at the lowest position in the vertical direction and the vertical center of the vertical cross section of the electrolyte collecting pipe is preferably 100 mm or more, more preferably 200 to 1400 mm, and still more preferably 600 to 1200 mm.

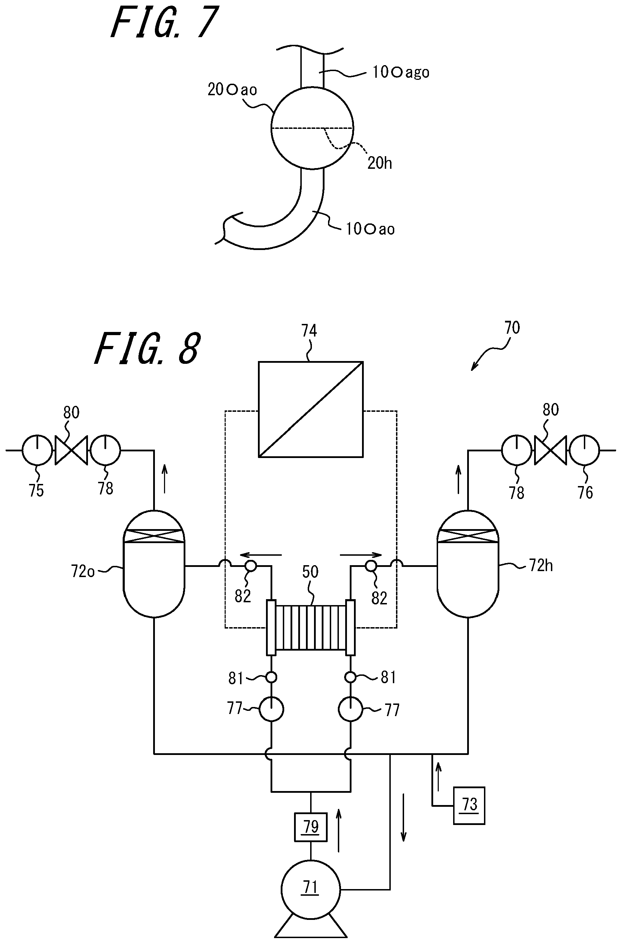

According to claim 1 in the bipolar electrolyzer, the hose extending from the discharge port at the highest position in the vertical direction is connected to the electrolyte collecting pipe vertically above the vertical center of the vertical cross section of the electrolyte collecting pipe, and the hose extending from the discharge port at the lowest position in the vertical direction is connected to the electrolyte collecting pipe vertically below the vertical center of the vertical cross section of the electrolyte collecting pipe from a viewpoint of positioning gas, which is relatively light, on a upper side in order to improve the separation of gas generated by electrolysis and the electrolyte (FIGS. 7 and 9). For example, when the number of the discharge ports is two, the hoses 10Oago and 10Ocgo that extend from the discharge port on the vertical upper side are connected vertically above the centers 20h of the cross sections of the electrolyte collecting pipes 20Oao and 20co, and the hoses 10Oao and 10Oco that extend from the discharge port on the vertical lower side are connected vertically below the centers 20h of the cross sections of the electrolyte collecting pipes 20Oao and 20co (FIGS. 7 and 9).

Preferably, the bipolar electrolyzer for alkaline water electrolysis 50 of the present embodiment has a plurality of the bipolar elements 60.

The following provides a detailed description of components of the bipolar electrolyzer for alkaline water electrolysis 50 of the present embodiment.

In the following, a preferred embodiment for enhancing the effect of what is disclosed is also described in detail.

### - Partition wall -

In the present embodiment, the shape of the partition wall 1 may be, but not limited to, a planar shape having a predetermined thickness.

Note that the partition wall 1 may usually be used so that the given direction D1 along the partition wall 1 is the vertical direction, specifically, so that when the plan-view shape of the partition wall 1 is rectangular as illustrated in FIGS. 3 to 5, the given direction D1 along the partition wall 1 is the same direction as the direction of one of two opposing pairs of sides.

From a viewpoint of achieving uniform supply of electric power, the partition wall 1 is preferably made of a material having conductivity, and from the perspectives of alkali resistance and heat resistance, preferred materials include nickel, nickel alloy, mild steel, and nickel alloy plated with nickel.

### - Electrode -

In hydrogen production by alkaline water electrolysis of the present embodiment, reduction of energy consumption, specifically, reduction of electrolytic voltage presents a significant challenge. Since the electrolytic voltage greatly depends on the electrodes 2, the performances of the electrodes 2 are important.

The electrolytic voltage for alkaline water electrolysis is divided into the overvoltage of an anode reaction (oxygen generation), the overvoltage of a cathode reaction (hydrogen generation), and the voltage dependent on the inter-electrode 2 distance between the anode 2a and the cathode 2c, other than the voltage required for water electrolysis that can be theoretically determined. As used herein, the term "overvoltage" refers to a voltage that needs to be excessively applied beyond the theoretical electrolysis potential for providing a certain current flow, and its value depends on the current value. When the same current flows, power consumption can be reduced by using an electrode 2 having a low overvoltage.

In order to attain low overvoltage, the requirements for the electrode 2 include high conductivity, high oxygen generation ability (or hydrogen generation ability), and high wettability of the electrolyte on the surface of the electrode 2.

Examples of the electrode 2 for alkaline water electrolysis include an electrode that is less susceptible to corrosion of the substrate of the electrode 2 and the catalyst layer, detachment of the catalyst layer, dissolution into the electrolyte, adhesion of inclusions to the membrane 4, and the like even in the case of using unstable current such as renewable energy, other than an electrode having a low overvoltage.

As the electrode 2 in the present embodiment, a porous body is preferred in order to increase the surface area used for electrolysis and to efficiently remove gas generated by electrolysis from the surface of the electrode 2. In particular, in the case of a zero-gap electrolyzer, it is preferable that the surface of the electrode 2 in contact with the membrane 4 and the opposite surface penetrate each other because it is necessary to defoam gas generated from the back side of the contact surface in contact with the membrane 4.

Examples of the porous body include a plain weave mesh, a punching metal, an expanded metal, and a metal foam.

Although the electrode 2 in the present embodiment may be a substrate itself or a substrate on the surface of which there is a catalyst layer having a high reaction activity, the latter is preferred.

Although the material of the substrate is not particularly limited, mild steel, stainless steel, nickel, and a nickel-based alloy are preferable from a viewpoint of the resistance to the usage environment.

Preferably, the catalyst layer of the anode 2a has a high oxygen-generating ability. It is possible to use, for example, nickel, cobalt, iron, or a platinum group element. In order to attain a desired activity and durability, the catalyst layer can be formed as a metal simple substance, a compound such as an oxide, a complex oxide or alloy composed of a plurality of metal elements, or a mixture thereof. An organic substance such as a polymer may be contained in order to improve durability and adhesiveness to the substrate.

Preferably, the catalyst layer of the cathode 2c has a high hydrogen-generating ability. It is possible to use, for example, nickel, cobalt, iron, or a platinum group element. In order to attain a desired activity and durability, the catalyst layer can be formed as a metal simple substance, a compound such as an oxide, a complex oxide or alloy composed of a plurality of metal elements, or a mixture thereof. An organic substance such as a polymeric material may be contained in order to improve durability and adhesiveness to the substrate.

Examples of the method of forming a catalyst layer on a substrate include plating, thermal spraying such as plasma thermal spraying, thermolysis by applying a precursor layer solution on a substrate followed by heating, a method by immobilizing a catalyst material mixed with a binder component on a substrate, and vacuum film deposition such as sputtering.

### - Outer frame -

Although the shape of the outer frame 3 in the present embodiment is not particularly limited as long as it can border the partition wall 1, the outer frame 3 may have a shape in which an inner surface over the periphery of the partition wall 1 extends along the direction perpendicular to the plane surface of the partition wall 1.

The shape of the outer frame 3 is not particularly limited, and may be appropriately determined according to the plan-view shape of the partition wall 1.

As a material of the outer frame 3, a material having conductivity is preferable, and from the perspectives of alkali resistance and heat resistance, preferred materials include nickel, nickel alloy, mild steel, and nickel alloy plated with nickel.

### - Membrane -

As the membrane 4 used in the bipolar electrolyzer 50 of the present embodiment, an ion-permeable membrane 4 is used in order to separate the generated hydrogen gas and oxygen gas while conducting ions. As this ion-permeable membrane 4, it is possible to use an ion exchange membrane having an ion exchange ability or a porous membrane through which an electrolyte can permeate. This ion-permeable membrane 4 preferably has low gas permeability, high ionic conductivity, low electronic conductivity, and high strength.

### - Porous membrane -

The porous membrane has a plurality of fine through-holes, and has a structure that allows the electrolyte to permeate through the membrane 4. It is very important to control the pore size, porosity, hydrophilicity, and the like of the porous structure because the electrolyte permeates into the porous membrane, whereby the porous membrane exhibits ion conduction. On the other hand, the porous membrane is required to prevent not only the electrolyte but also the generated gas from passing therethrough, that is, to have a gas barrier property. It is important to control the porous structure from this standpoint as well.

The porous membrane has a plurality of fine through-holes, and may be, for example, a polymeric porous membrane, an inorganic porous membrane, a woven fabric, or a nonwoven fabric. These can be prepared with known techniques.

Although the thickness of the porous membrane is not particularly limited, it is preferably 200 µm or more and 700 µm or less. When the porous membrane has a thickness of 250 µm or more, the porous membrane has a further better gas impermeability and a further enhanced strength against an impact. From this perspective, the lower limit of the thickness of the porous membrane is more preferably 300 µm or more, still more preferably 350 µm or more, and particularly preferably 400 µm or more. On the other hand, when the thickness of the porous membrane is 700 µm or less, permeation of ions is less likely to be blocked by the resistance of the electrolyte contained in the pores during operation, thereby allowing to maintain a further better ion permeability. From this perspective, the upper limit of the thickness of the porous membrane is more preferably 600 µm or less, still more preferably 550 µm or less, and particularly preferably 500 µm or less. The above effect is further enhanced, especially when the polymer resin contains at least one selected from the group consisting of polysulfone, polyethersulfone, and polyphenyl sulfone.

### - Ion exchange membrane -

Ion exchange membranes include a cation exchange membrane which selectively allows cations to permeate through and an anion exchange membrane which selectively allows anions to permeate through, and either exchange membrane can be used.

The material of the ion exchange membrane is not particularly limited, and any known material can be used. For example, a fluorine-containing resin or a modified resin of a polystyrene-divinylbenzene copolymer can be suitably used. In particular, a fluorine-containing ion exchange membrane is preferable because it has excellent heat resistance, chemical resistance, and the like.

### ((Zero-gap structure))

In a bipolar element 60 in a zero-gap cell, as a means for reducing the distance between electrodes, it is preferable to dispose a spring, which is an elastic body, between the electrode 2 and the partition wall 1, thereby supporting the electrode 2 with the spring. For instance, in a first example, a spring made of a conductive material is attached to the partition wall 1, and the electrode 2 may be attached to the spring. Further, in a second example, a spring is attached to an electrode rib 6 attached to the partition wall 1, and the electrode 2 may be attached to the spring. In the case of adopting such a configuration using an elastic body, it is necessary to appropriately adjust the strength of the spring, the number of springs, the shape, and the like, as necessary, to prevent a pressure at which the electrode 2 comes in contact with the membrane 4 from being non-uniform.

As illustrated in FIGS. 2 and 6, in the outer header type bipolar element for alkaline water electrolysis 60 of the present embodiment, an conductive elastic body 2e and a current collector 2r are provided so as to be sandwiched between the cathode 2c or the anode 2a and the partition wall 1, and the conductive elastic body 2e is provided so as to be sandwiched between the cathode 2c or the anode 2a and the current collector 2r.

### - Current collector -

The current collector 2r plays a role of transmitting electricity to the conductive elastic body 2e and the electrode 2 stacked over the current collector 2r, supporting the loads received from them, and allowing the gas generated from the electrodes 2 to pass through to the partition wall 1 side without hindrance. Therefore, the shape of the current collector 2r is preferably that of an expanded metal, a punched porous plate, or the like. In this case, the aperture ratio of the current collector 2r is preferably within a range allowing the hydrogen gas generated from the electrode 2 to be extracted to the partition wall 1 side without hindrance. However, when the aperture ratio is too high, there may be a problem such as deterioration of the strength or the conductivity to the conductive elastic body 2e. When the aperture ratio is too small, outgassing may become insufficient.

As the material of the current collector 2r, nickel, nickel alloy, stainless steel, mild steel, or the like can be used in view of conductivity and alkali resistance. In view of corrosion resistance, nickel, or mild steel or stainless steel nickel alloy plated with nickel is preferred. Such a current collector 2r is secured to the rib 6 by means of spot welding, laser welding, or the like.

### - Conductive elastic body -

It is essential that the conductive elastic body 2e is between the current collector 2r and the electrode 2 and in contact with the current collector 2r and the electrode 2, and allows the electricity to be transmitted to the electrode 2, and that the conductive elastic body 2e does not inhibit the diffusion of the gas generated from the electrode 2. This is because the electrical resistance increases and the area of the electrode 2 used for electrolysis decreases due to the inhibition of the diffusion of the gas, resulting in lower electrolysis efficiency. The conductive elastic body 2e has the most important role to bring the membrane 4 and the electrode 2 into close contact with each other by evenly applying an appropriate pressure to the electrode 2 so as not to damage the membrane 4.

As the conductive elastic body 2e, any known one can usually be used. The conductive elastic body 2e is preferably a corrugated cushion mat of woven nickel wires having a wire diameter of about 0.05 mm to 0.5 mm because it is easy to maintain a zero-gap structure Z.

Preferred materials include nickel, and nickel alloy, stainless steel, and mild steel plated with nickel in view of the conductivity and the alkali resistance, but are not limited thereto.

The conductive elastic body 2e having a thickness of about 1 mm to about 20 mm can usually be used.

As the substrate for the electrode 2 usable for the zero-gap structure Z, an electrode 2 having a small wire diameter and a small mesh is preferred because of its high flexibility. As the material of such a substrate, any known material can usually be used. For example, as the substrate of the cathode 2c, nickel, nickel alloy, stainless steel, mild steel, or nickel alloy, stainless steel, or mild steel plated with nickel can be used. These substrates preferably have a wire diameter ranging from about 0.05 mm to about 0.5 mm and an aperture ranging from about 30 mesh to about 80 mesh.

### - Electrode compartment -

In the electrolytic cell 65 according to the present embodiment, as illustrated in FIG. 2, the partition wall 1, the outer frame 3, and the membrane 4 define the electrode compartment 5 through which the electrolyte pass.

### - Flow rectifier -

In the bipolar electrolyzer for alkaline water electrolysis 50 of the present embodiment, it is preferable that flow rectifier 6 (anode flow rectifier 6a, cathode flow rectifier 6c) is attached to the partition wall 1, and the flow rectifier 6 (rib) is in physical contact with the electrode 2. According to this configuration, the flow rectifier 6 serves as a support for the electrode 2, and thus it is easy to maintain the zero-gap structure Z.

Here, the electrode 2 may be disposed to the flow rectifier 6, or the current collector 2r, the conductive elastic body 2e, and the electrode 2 may be disposed to the flow rectifier 6 in this order.

For one example of the bipolar electrolyzer for alkaline water electrolysis 50 described above, in the cathode compartment 5c, a structure in which flow rectifier 6 - current collector 2r - conductive elastic body 2e - electrode 2 are overlapped one another in this order is employed, and in the anode compartment 5a, a structure in which flow rectifier 6 - electrode 2 are overlapped each other in this order is employed.

Although, for one example of the bipolar electrolyzer for alkaline water electrolysis 50 described above, in the cathode compartment 5c, the structure of "flow rectifier 6 - current collector 2r - conductive elastic body 2e - electrode 2" is employed, and in the anode compartment 5a, the structure of "flow rectifier 6 - electrode 2" is employed, the present disclosure is not limited to this, and the structure of "flow rectifier 6 - current collector 2r - conductive elastic body 2e - electrode 2" may also be employed in the anode compartment 5a.

Preferably, the flow rectifier 6 (anode flow rectifier 6a, cathode flow rectifier 6c) plays a role of conducting electrical current from the partition wall 1 to the anode 2a or the cathode 2c in addition to a role of supporting the anode 2a or the cathode 2c.

In the bipolar electrolyzer for alkaline water electrolysis 50 of the present embodiment, it is preferable that at least a part of the flow rectifier 6 is conductive, and it is further preferable that the entire flow rectifier 6 is conductive. According to such a configuration, an increase in the cell voltage caused by the deflection of the electrode can be suppressed.

As the material of the flow rectifier 6, a conductive metal is generally used. For example, mild steel plated with nickel, stainless steel, or nickel can be used.

The interval between adjacent anode flow rectifiers 6a or the interval between adjacent cathode flow rectifiers 6c is determined in consideration of the electrolysis pressure, the pressure difference between the anode compartment 5a and the cathode compartment 5c, or the like.

The length of the flow rectifier 6 (anode flow rectifier 6a, cathode flow rectifier 6c) may be determined as appropriate according to the size of the partition wall 1.

The height of the flow rectifier 6 may be determined as appropriate according to the distance from the partition wall 1 to each flange, the thickness of the gasket 7, the thickness of the electrode 2 (the anode 2a, the cathode 2c), the distance between the anode 2a and the cathode 2c, or the like.

The thickness of the flow rectifier 6 may range from 0.5 mm to 5 mm in consideration of cost, productivity, strength, and the like. A flow rectifier having a thickness of 1 mm to 2 mm can be easily used, but the thickness is not particularly limited.

### - Gasket -

In the bipolar electrolyzer for alkaline water electrolysis 50 of the present embodiment, the gasket 7 having the membrane 4 is preferably sandwiched between the outer frames 3 bordering the partition wall 1.

The gasket 7 is used for sealing the electrolyte and the generated gas between the bipolar element 60 and the membrane 4 and between the bipolar elements 60, whereby it is possible to prevent leakage of the electrolyte and the generated gas to the outside of the electrolyzer and intermixing of the gas between both compartments.

The material of the gasket 7 is not particularly limited, and any known material such as rubber or resin having an insulation property can be selected.

Specific examples of rubber and resin materials that can be used include: rubber materials such as natural rubber (NR), styrene butadiene rubber (SBR), chloroprene rubber (CR), butadiene rubber (BR), acrylonitrile-butadiene rubber (NBR), silicone rubber (SR), ethylene-propylene rubber (EPT), ethylene-propylene-diene rubber (EPDM), fluoro rubber (FR), isobutylene-isoprene rubber (IIR), urethane rubber (UR), and chlorosulfonated polyethylene rubber (CSM); fluoro resin materials such as polytetrafluoroethylene (PTFE), tetrafluoroethylene-perfluoroalkyl vinyl ether copolymer (PFA), tetrafluoroethylene-ethylene copolymer (ETFE), and chlorotrifluoroethylene-ethylene copolymer (ECTFE); and resin materials such as polyphenylene sulfide (PPS), polyethylene, polyimide, and polyacetal. Of these, ethylene-propylene-diene rubber (EPDM) and fluoro rubber (FR) are particularly suitable in view of elastic modulus and alkali resistance.

The size of the gasket 7 is not particularly limited and may be designed according to the dimensions of the electrode compartment 5 and the membrane. Preferably, the width of the gasket 7 is from 10 mm to 40 mm.

The thickness of the gasket 7 is not particularly limited and designed according to the material and the elastic modulus of the gasket 7 and the cell area. The gasket 7 has a thickness of preferably 1.0 mm to 10 mm, and more preferably 3.0 mm to 10 mm.

The elastic modulus of the gasket 7 is not particularly limited and designed according to the material of the electrode 2 and the cell area. The elastic modulus as the tensile stress at 100% deformation preferably ranges from 0.20 MPa to 20 MPa, and more preferably ranges from 1.0 MPa to 10 MPa in view of the sealing property and the cell strength when the cells are stacked.

Note that the tensile stress can be measured according to JIS K 6251. For example, Autograph AG from Shimadzu Corporation may be used for the measurement.

### - Header-

The bipolar electrolyzer for alkaline water electrolysis 50 has the cathode compartment 5c and the anode compartment 5a in each electrolytic cell 65. In order to continuously carry out electrolysis in the electrolyzer 50, it is necessary to continuously supply an electrolyte containing sufficient amounts of raw materials consumed in electrolysis to the cathode compartment 5c and the anode compartment 5a of each electrolytic cell 65.

The electrolytic cell 65 is connected to electrolyte supply/discharge pipes, which are referred to as headers and common in a plurality of electrolytic cells 65. In general, an anode distributing pipe is referred to as an anode inlet header 10ai, a cathode distributing pipe is referred to as a cathode inlet header 10ci, an anode collecting pipe is referred to as an anode outlet header 10ao, and a cathode collecting pipe is referred to as a cathode outlet header 10co. The electrolytic cell 65 is connected to each distributing pipe for the electrode and each collecting pipe for the electrode through hoses or the like.

Although the material of the header is not particularly limited, it is necessary to employ a material which can sufficiently withstand a corrosive property of an electrolyte to be used and operating conditions such as pressure and temperature. The material of the header may be iron, nickel, cobalt, PTFE, ETFE, PFA, polyvinyl chloride, polyethylene, or the like.

In the present embodiment, the range of the electrode compartment 5 may vary according to the detail structure of the outer frame 3 to be provided at the outer end of the partition wall 1, and the detail structure of the outer frame 3 may vary depending on the arrangement mode of the header (pipe for distributing or collecting the electrolyte) attached to the outer frame 3. The representative arrangement modes of the header of the bipolar electrolyzer 50 are an internal header type and an external header 10O type.

### - External header -

The external header 10O type refers to a type in which the bipolar electrolyzer 50 and the header (pipe for distributing or collecting the electrolyte) are provided independently.

In the outer header 10O type bipolar electrolyzer 50, an anode inlet header 10Oai and a cathode inlet header 10Oci are independently provided so that they run in parallel to the electrolyzer 50 in a direction perpendicular to the energized surface of the electrolysis cell 65. The anode inlet header 10Oai and the cathode inlet header 10Oci are connected to each electrolysis cell 65.

The anode inlet header 10Oai, the cathode inlet header 10Oci, the anode outlet headers 10Oao and 10Oago, and the cathode outlet headers 10Oco and 10Ocgo, which are externally connected to the outer header 10O type bipolar electrolyzer 50 are collectively referred to as the "outer headers 10O".

In the example of the outer header 10O type, a tubular member is provided to a through-hole for the header at a lower portion of the outer frame 3 at the end of the partition wall 1, and the tubular member is connected to the anode inlet header 10Oai and the cathode inlet header 10Oci. Similarly, a tubular member (for example, hose or tube) is provided to a through-hole for the header at an upper portion of the outer frame 3 at the end of the partition wall 1, and the tubular member is connected to the anode outlet header 10Oao and the cathode outlet header 10Oco.

Note that the inner header type and outer header type bipolar electrolyzers 50 may internally have a gas-liquid separation box for separating the gas generated by electrolysis from the electrolyte. The attachment position of the gas-liquid separation box is not particularly limited. The gas-liquid separation box may be attached between the anode compartment 5a and the anode outlet header 10ao, or between the cathode compartment 5c and the cathode outlet header 10co.

The surface of the gas-liquid separation box may be coated with a coating material which can sufficiently withstand a corrosive property of an electrolyte and operating conditions such as pressure and temperature. As the coating material, an insulating material may be employed for the purpose of increasing the electric resistance of the leak current circuit inside the electrolyzer. As the coating material, EPDM, PTFE, ETFE, PFA, polyvinyl chloride, polyethylene, or the like may be employed.

### (Electrolysis device for alkaline water electrolysis)

FIG. 8 illustrates the outline of an electrolysis device for alkaline water electrolysis of the present embodiment.

The electrolysis device for alkaline water electrolysis 70 of the present embodiment has the bipolar electrolyzer for alkaline water electrolysis 50 of the present embodiment, a tubing pump 71 for circulating the electrolyte, a gas-liquid separation tank 72 for separating the electrolyte from hydrogen and/or oxygen, and a water replenisher 73 for replenishing water consumed by electrolysis.

According to the electrolysis device for alkaline water electrolysis 70 of the present embodiment, the effect of the bipolar electrolyzer for alkaline water electrolysis of the present embodiment can be obtained.

In other words, according to the present embodiment, upon an operation utilizing a variable power source such as renewable energy, the function of the reverse current absorber of the electrode 2 makes it possible to realize long-term storage and long-distance transportation of large power, reduce self-discharge that occurs when power supply is stopped, and stabilize the electric control system. According to the present embodiment, it is further possible to realize power storage with high efficiency, specifically, lower pump power and lower leakage current.

The following provides a description of the components of the electrolysis device for alkaline water electrolysis 70 of the present embodiment.

### - Tubing pump -

The tubing pump 71 used in the present embodiment is not particularly limited, and may be appropriately defined.

### - Gas-liquid separation tank -

The gas-liquid separation tank 72 used in the present embodiment includes a hydrogen separation tank 72h for separating the electrolyte and hydrogen gas, and an oxygen separation tank 72o for separating the electrolyte and oxygen gas.

The hydrogen separation tank 72h is used in connection to the cathode compartment 5c, and the oxygen separation tank 72o is used in connection to the anode compartment 5a.

The gas-liquid separation tanks 72 of the alkaline water electrolysis system include two tanks: an oxygen separation tank 72o used for the anode compartment 5a and a hydrogen separation tank 72h used for the cathode compartment 5c.

The gas-liquid separation tank 72 for the anode compartment 5a separates the oxygen gas generated in the anode compartment 5a and the electrolyte, and the gas-liquid separation tank 72 for the cathode compartment 5c separates the hydrogen gas generated in the cathode compartment 5c and the electrolyte.

What is discharged from the electrolytic cell 65 in a state where the electrolyte and the generated gas are mixed is allowed to flow into the gas-liquid separation tank 72. In a case in which gas-liquid separation is not performed properly, oxygen gas and hydrogen gas are mixed when the electrolyte of the cathode compartment 5c and the electrolyte of the anode compartment 5a are mixed, whereby the purity of gas is lowered. In the worst case, there is a risk of forming detonating gas.

The gas and the electrolyte flowing into the gas-liquid separation tank 72 are divided into the gas phase in the upper layer of the tank for the gas and the liquid phase in the lower layer of the tank for the electrolyte. The degree of gas-liquid separation is determined according to the linear velocity of the electrolyte in the gas-liquid separation tank 72, the speed at which the generated gas bubbles float, and the residence time in the gas-liquid separation tank 72.

After the gas is separated, the electrolyte flows out from an outlet on the lower side of the tank and flows into the electrolytic cell 65 again to form a circulation path. Since both of oxygen gas and hydrogen gas discharged from a discharge port on the upper side of the tank are in a state containing alkali mist, it is preferable to attach a device that can liquefy excess mist and return it to the gas-liquid separation tank 72, such as a mist separator or a cooler, downstream of the discharge port.

The gas-liquid separation tank 72 may be provided with a liquid level gauge in order to grasp the liquid level height of the electrolyte stored inside thereof.

In addition, the gas-liquid separation tank 72 is preferably provided with a pressure release valve. In this manner, even if the pressure rises due to the gas generated by electrolysis, the pressure can be safely lowered when the design pressure is exceeded.

The inlet to the gas-liquid separation tank 72 is preferably positioned above the electrolyte surface in order to improve gas-liquid separation, but the position of the inlet is not limited to this.

In order to prevent the liquid surface in the electrolyzer from being lowered when the circulation is stopped, the electrolyte surface in the gas-liquid separation tank 72 is preferably above the upper surface of the electrolyzer, but the position of the electrolyte surface is not limited to this.

A shut-off valve is preferably provided between the electrolysis cell 65 and the gas-liquid separation tank 72, but this configuration is a non-limiting configuration.

As a material of the gas-liquid separation tank 72, an alkali-resistant metal such as nickel is used. On the other hand, when a general-purpose metal such as iron is used as a housing material for a tank, an electrolyte contact surface inside the tank that has been coated with a fluorine resin or the like may be used. The material of the gas-liquid separation tank 72 in the present disclosure is not limited to this.

The capacity of the gas-liquid separation tank 72 is preferably small in consideration of the installation volume. However, in a case in which the capacity is too small, the liquid surface in the tank fluctuates when the pressure difference between the cathode 2c and the anode 2a becomes large or the electrolytic current value fluctuates. Therefore, it is necessary to consider this fluctuation.

Similarly, when the height of the tank is low, it is easily affected by the fluctuation described above. Therefore, it is preferable that the height of the tank is high.

### - Water replenisher -

The water replenisher 73 used in the present embodiment is not particularly limited, and may be appropriately defined.

Although general tap water may be used as water, ion-exchanged water, RO water, ultrapure water, or the like is preferably used in consideration of a long-term operation.

### - Miscellaneous -

The electrolysis device for alkaline water electrolysis 70 of the present embodiment may comprise other components other than the bipolar electrolyzer 50, the gas-liquid separation tank 72, and the water replenisher 73, such as a rectifier 74, an oxygen concentration meter 75, a hydrogen concentration meter 76, a flow meter 77, a pressure gauge 78, a heat exchanger 79, a pressure control valve 80, and a thermometer 81 and 82.

In addition, it is preferable that the electrolysis device for alkaline water electrolysis 70 of the present embodiment further comprises a detector that detects the stop of electric power supply, and a controller that stops a tubing pump automatically. By providing a detector and a controller, it is possible to efficiently reduce an effect of self-discharge without an artificial manipulation even under a largely fluctuating power source such as renewable energy.

### (Method for alkaline water electrolysis)

The method for alkaline water electrolysis of claim 14 can be carried out using the electrolysis device for alkaline water electrolysis 70 of the present embodiment. According to the method for alkaline water electrolysis of the present embodiment, hydrogen and optionally oxygen is produced.

The hydrogen production method of the present embodiment is a hydrogen production method comprising electrolyzing water containing an alkali in an electrolyzer to produce hydrogen, wherein the electrolyzer has at least a bipolar element; and the bipolar element comprises electrodes including an anode and a cathode, a partition wall that separates the cathode and the anode, and a discharge port that discharges an electrolyte containing gas generated at the electrode, and the bipolar element has a plurality of the discharge ports in a region sandwiched between the anode or the cathode and the partition wall according to claim 1.

Suitable conditions for the method are described below.

The electrolyte used in the present embodiment may be an alkaline aqueous solution in which an alkali salt is dissolved, such as an NaOH aqueous solution or a KOH aqueous solution.

The concentration of the alkali salt is preferably from 20% by mass to 50% by mass, and more preferably from 25% by mass to 40% by mass.

In the present embodiment, a KOH aqueous solution having a concentration of 25% by mass to 40% by mass is particularly preferable in view of ionic conductivity, kinematic viscosity, and freezing at a lower temperature.

In the method for alkaline water electrolysis of the present embodiment, the temperature of the electrolyte in the electrolysis cell 65 is preferably from 80°C to 130°C.

When the temperature is within the above range, it is possible to effectively suppress thermal degradation of the members of the electrolysis device 70, such as the gasket 7 and the membrane 4 while maintaining high electrolysis efficiency.

The temperature of the electrolyte is still more preferably from 85°C to 125°C, and particularly preferably from 90°C to 115°C.

In the method for alkaline water electrolysis of the present embodiment, the current density applied to the electrolysis cell 65 is preferably from 4 kA/m² to 20 kA/m², and more preferably from 6 kA/m² to 15 kA/m².

In particular, when a variable power source is used, it is preferable to set the upper limit of the current density within the above range.

In the method for alkaline water electrolysis of the present embodiment, the pressure in the electrolytic cell 65 is preferably 3 kPa to 1000 kPa, and more preferably 3 kPa to 300 kPa.

In the present embodiment, using the above-described components of the electrolysis device for alkaline water electrolysis 70, it is possible to produce, for example, an electrolysis device for alkaline water electrolysis 70 having a configuration as illustrated in FIG. 8, but what can be produced is not limited to this.

Further, in the bipolar electrolyzer and the method for alkaline water electrolysis of the present embodiment, it is preferable that the flow of the electrolyte in the outlet hose is stopped by stopping the tubing pump when the power supply to the bipolar electrolyzer for alkaline water electrolysis is stopped. By stopping the flow of the electrolyte in the outlet hose, the electrolyte flows down to the outlet header due to its own weight, whereby an insulating gas layer is formed in the outlet hose. Thus, the liquid resistance of the outlet hose increases infinitely, whereby almost no leakage current flows through the outlet hose. As a result, the influence of self-discharge can be reduced.

The bipolar electrolyzer of the present embodiment preferably has a mechanism in which a gas layer is formed in the hose after the flow of the electrolyte stops. Examples of the mechanism include a structure having the liquid surface of the gas-liquid separation tank at a position below the discharge port, a structure having a point where the direction of the hose between the discharge port and the electrolyte collecting pipe changes from the vertically upward direction to the vertically downward direction, a structure having a point where the direction of the hose between the discharge port and the electrolyte collecting pipe changes from the vertically downward direction to the vertically upward direction, and a structure having a valve that closes the hose in conjunction with the stop of the electrolyte flow.

It is important that the hose is made of an insulating material, and it is more preferable that the hose has an electrical resistivity of 1 MΩ·cm or more. The electrical resistivity can be measured by an insulation resistance meter, and an existing MΩ tester can be used.

Furthermore, the hose is preferably a hose the inside of which is visible from the outside. Examples of the visible hose include a hose having a light-transmitting property. The gas-liquid state in the hose can be confirmed, and this will enable to check whether the operating state during electrolysis is in a stable state. For example, when the circulation amount of the electrolyte is too large, it can be confirmed that the gas-liquid separation deteriorates and the electrolyte flows out to the gas hose side. In addition, when the electrolytic current density is too large, it can be confirmed that the gas-liquid separation deteriorates and the generated gas is generated constantly or intermittently on the liquid hose side. Therefore, it is preferable that the transparency is as high as possible.

The material of such a hose has alkali resistance, high-temperature resistance, and pressure resistance. For example, a hose made of a fluorine material, such as PTFE or PFA, is preferred.

The light-transmitting property can be determined from the light transmittance measured according to JIS K7361-1. The visible hose is preferably a hose having a light transmittance of 10% or more.

### EXAMPLES

The following provides a more detailed description of the present disclosure through examples.

An outer header type bipolar element for alkaline water electrolysis and an electrolysis device using the same were prepared as follows.

### - Partition wall, outer frame -

As a bipolar element, one provided with a partition wall partitioning an anode and a cathode and an outer frame surrounding the partition wall was used. All of the members in contact with an electrolyte, such as the partition wall and the frame of the bipolar element, were made of nickel.

### - Anode -

An expanded nickel substrate that had been subjected to blasting in advance was used, and granulated products of nickel oxide were sprayed onto both surfaces of the conductive substrate by plasma spraying in order to produce an anode. The dimension of this electrode was adjusted to 1155 mm in length × 2354 mm in width by cutting to obtain the anode.

### - Cathode -

Nickel thin wires having a diameter of 0.15 mm were knitted with 40 mesh to obtain a plain woven mesh substrate, on which platinum was supported, and the resultant was used as a conductive substrate.

The size of the cathode was 1155 mm × 2354 mm in plan view.

### - Zero-gap structure -

By stacking bipolar elements with gaskets holding a membrane interposed therebetween to assemble a bipolar electrolyzer, a cathode sample and an anode sample were pressed from both sides of the membrane and contacted to form a zero-gap structure.

Only the anode sample was used on the anode side, and the cathode sample consisting of a combination of "cathode - conductive elastic body - current collector" was used on the cathode side.

The above-described anode sample was used. As the current collector, an expanded nickel substrate that had been subjected to blasting in advance was used. The thickness of the substrate was 1 mm, and the aperture ratio was 54%. Four nickel wires having a wire diameter of 0.15 mm were knitted to obtain a woven fabric, which was further corrugated to have a corrugation height of 5 mm, and the resultant was used as the conductive elastic body. The thickness was 5 mm, the repulsive force at 50% compressive deformation was 150 g/cm², and the aperture size was about 5 mesh. The conductive elastic body was fixed on the current collector by spot welding. The above-described cathode sample was used.

### - Membrane -

Using zirconium oxide (trade name: "EP Zirconium Oxide", Daiichi Kigenso Kagaku Kogyo Co., Ltd.), N-methyl-2-pyrrolidone (Wako Pure Chemical Industries, Ltd.), polysulfone ("Udel"^{®} (Udel is a registered trademark in Japan, other countries, or both), Solvay Advanced Polymers), and polyvinylpyrrolidone (weight average molecular weight (Mw): 900000, Wako Pure Chemical Industries, Ltd.), a coating solution having the following component composition was obtained.
Polysulfone: 15 parts by mass
Polyvinylpyrrolidone: 6 parts by mass
N-methyl-2-pyrrolidone: 70 parts by mass
zirconium oxide: 45 parts by mass

The above-described coating solution was applied to both surfaces of a polyphenylene sulfide mesh (Clever Co., Ltd., film thickness: 280 µm, aperture size: 358 µm, fiber diameter: 150 µm) as a substrate. Immediately after applying, the substrate coated with the coating solution was exposed to vapor, followed by immersing into a coagulation bath to form a coating film on the surface of the substrate. Then, the coating film was thoroughly rinsed with pure water to obtain a porous membrane. The membrane was adjusted to 1172 mm in length × 2369 mm in width by cutting to obtain a membrane sample.

### - Bipolar electrolyzer and bipolar element -

Four bipolar elements are used, and as illustrated in FIG. 1, on one end side, a fast head, an insulating plate, and an anode terminal unit were arranged, four sets of an anode side gasket part, a membrane, a cathode side gasket part, and a bipolar element arranged in this order were further arranged, and furthermore an anode side gasket part, a membrane, and a cathode side gasket part were arranged. On the other end side, a cathode terminal unit, an insulating plate, and a loose head were arranged. Then, these were stacked by tightening them from both sides of the fast head and the loose head with a gasket seal surface pressure of 2450 kN/m² to assemble the bipolar electrolyzer.

This example had five pairs of serial connection structures composed of five cathode compartments and five anode compartments.

### - Gasket -

The gasket used was a square gasket that has a thickness of 4.0 mm, a width of 18 mm, an inside dimension of 1155 mm × 2354 mm, an opening on its inside having the same dimension in plan view as that of the electrode compartment, and a slit structure for inserting and holding a membrane.

### (Example 1)

### - Bipolar element -

A bipolar element used had a rib height of 7 mm for each of the anode compartment and the cathode compartment and a thickness of the bipolar element of 21 mm.

### - Header, conduit -

An outer header type bipolar element was employed.

As illustrated in FIGS. 3 and 4, in the bipolar electrolyzer 50 of the present example, conduits for distributing and collecting the electrolyte (anode distributing pipe 20Oai, cathode distributing pipe 20Oci, anode collecting pipe 20Oao, cathode collecting pipe 20Oco) were provided outside the housing of the electrolyzer 50. Further, in this electrolyzer 50, hoses (anode inlet header 10Oai, cathode inlet header 10Oci) as inlet headers 10i for allowing the electrolyte to pass from these distributing pipes 20i (inlet conduits) to the electrode compartments 5 were externally attached. The outlet headers 10O (anode outlet headers 10Oao, 10Oago, cathode outlet headers 10Oco, 10Ocgo) for allowing the electrolyte and/or gas to pass from the electrode compartments 5 to the collecting pipes 20o (outlet conduits) were externally attached. As the outlet headers, headers 10Oago and 10Ocgo connected to discharge ports at high positions in the vertical direction and headers 10Oao and 10Oco connected to discharge ports at low positions in the vertical direction were provided.

Here, as illustrated in FIGS. 3 and 4, the inlet headers (anode inlet header 10Oai, cathode inlet header 10Oci) were arranged so as to extend outward from the vertical lower end side of the bipolar element 60, and the outlet headers (anode outlet headers 10Oao and 10Oago, cathode outlet headers 10Oco and 10cgo) were arranged so as to extend outward from the side of the partition wall 1 of the bipolar element 60. In addition, as illustrated in FIGS. 3 and 4, all of the conduits (anode distributing pipe 20Oai, cathode distributing pipe 20Oci, anode collecting pipe 20Oao, cathode collecting pipe 20Oco) were arranged so as to extend in a direction perpendicular to the partition wall 1 of the bipolar element 60.

The inclinations θ2 of the electrolyte outlets (discharge ports) 5co and 5ao positioned on the lower side are set at -45°, and the inclinations θ4 of the electrolyte outlet headers 10Oao and 10Oco are connected at -45°. On the other hand, the inclinations θ1 of the electrolyte outlets (discharge ports) 5cgo and 5ago positioned on the vertical upper side are set at 45°, and the inclinations Θ3 of the electrolytic gas outlet headers 10Oago and 10Ocgo are connected at 45°.

As illustrated in FIGS. 3 and 4, the position at which a discharge port on the vertical upper side was provided was set so that the vertical upper end of the discharge port was 28 mm away from the vertical upper end of the bipolar element, and the position at which a discharge port on the vertical lower side was provided was set so that the vertical upper end of the discharge port is 135 mm away from the vertical upper end of the bipolar element.

Further, an inlet side thermometer 81 for measuring the temperature of the inlet side electrolyte was attached to the electrolyte inlet side conduit 20i (anode distributing pipe 20Oai, cathode distributing pipe 20Oci), and an outlet side thermometer 82 for measuring the temperature of the outlet side electrolyte was attached to the electrolyte outlet side conduit 20o (anode collecting pipe 20Oao, cathode collecting pipe 20Oco), respectively (FIG. 8).

The electrolyte was flowed to the cathode compartment 5c via the cathode inlet header 10Oci and flowed from the cathode compartment 5c via the cathode outlet headers 10Oco and 10cgo. In addition, the electrolyte was flowed to the anode compartment 5a via the anode inlet header 10Oai and flowed from the anode compartment 5a via the anode outlet headers 10Oao and 10Oago.

As illustrated in FIGS. 3 and 4, the inlet hose is connected to one end side of the lower side of the outer frame 3 having a rectangular side-view shape, and the outlet hose is connected to the upper side of the side edge that is connected to the other end side of the lower side of the outer frame 3 having a rectangular side-view shape, respectively. Here, the inlet hose and the outlet hose were provided so as to face each other across the central part of the electrode compartment 5 in the electrode compartment 5 having a rectangular side-view shape. The electrolyte flowed from below to above while inclining with respect to the vertical direction, and rose along the electrode surface (FIG. 4).

The bipolar electrolyzer 50 of the present example has a structure in which the electrolyte flows into the anode compartment 5a or the cathode compartment 5c from the inlet hose of the anode compartment 5a or the cathode compartment 5c, and the electrolyte and the generated gas flow out of the electrolyzer 50 from the outlet hose of the anode compartment 5a or the cathode compartment 5c.

Note that the hoses are all made of PFA and are translucent (white light transmittance is about 50%), and the gas-liquid states in the hoses can be visually observed. In addition, the electrical resistivity of the hose is 1 MΩ·cm or more.

The bipolar electrolyzer of Example 1 was produced by the following procedure.

A cathode was attached on the cathode surface of a bipolar frame, and an anode was attached on the anode surface of the frame of a bipolar element, whereby the bipolar element was obtained. In addition, a cathode was attached to the frame of a cathode terminal element to obtain the cathode terminal element. An anode was attached to the frame of an anode terminal element to obtain the anode terminal element.

The areas S1 of the electrodes (anode and cathode) attached to the bipolar element were adjusted to 2.7 m².

In the headers (anode inlet header, anode outlet header, cathode inlet header, cathode outlet header) provided beside the outer frame, the inner diameter of the discharge port was set at ϕ 6 mm, and the cross-sectional area of the discharge port was adjusted to 2.83 × 10⁻⁵ m².

The distance h between the vertical center of the discharge port on the vertical lower side and the vertical center of the vertical cross section of the electrolyte collecting pipe was set at 600 mm.

In addition, the thickness T of the bipolar element was adjusted to 21 mm.

Four bipolar elements described above were prepared. In addition, one cathode terminal element described above and one anode terminal element described above were prepared.

Gaskets were stuck to metal frame parts of all of the bipolar elements, the cathode terminal element, and the anode terminal electrolytic cell element.

One membrane was interposed between the anode terminal element and the cathode side of the bipolar element. Four bipolar elements were arranged in series so that the anode side of one of the adjacent bipolar elements and the cathode side of the other bipolar element were opposed to each other, and three membranes were interposed one by one between adjacent bipolar elements. Further, one membrane was interposed between the anode side of the fourth bipolar element and the cathode terminal element. Using a fast head, an insulating plate, and a loose head, these were tightened with a press to obtain the bipolar electrolyzer of Example 1.

As the electrolyte, a 30% aqueous solution of KOH was used.

Circulation of the anode compartment, an oxygen separation tank (anode gas-liquid separation tank), and the anode compartment was performed by a tubing pump, and circulation of the cathode compartment, a hydrogen separation tank (cathode gas-liquid separation tank), and the cathode compartment was performed by a tubing pump.

The temperature of the electrolyte, which was the temperature of the inlet side thermometer 81, was adjusted to 80°C.

Note that as a circulation flow path, a 20A pipe which has a part contacting with the electrolyte that was SGP (Carbon Steel Pipe for Piping) subjected to Teflon^{®} (Teflon is a registered trademark in Japan, other countries, or both) lining inner surface treatment was used.

As the gas-liquid separation tank, a tank having a height of 1400 mm and a volume of 1 m³ was prepared. The liquid volume in each gas-liquid separation tank was set at about 50% of the design volume.

An electric current was flowed from a rectifier to the bipolar electrolyzer to be 10 kA/m² with respect to the area of each cathode and anode. In Example 1, since the area S1 of the electrode was 2.7 mm², an electric current of 27 kA was flowed from the rectifier to the bipolar electrolyzer.

The pressure in the electrolyzer was measured with a pressure gauge, and electrolysis was performed while adjusting the pressure so that the cathode side pressure was 50 kPa and the oxygen side pressure was 49 kPa. The pressure was adjusted by a pressure control valve provided downstream of the pressure gauge.

Then, the alkaline water electrolysis in Example 1 was evaluated as follows.

### (Electrolytic test)

Water electrolysis was performed by continuously energizing for 8 hours at a current density of 10 kA/m². The cell voltage V of the electrolyzer was measured, and the arithmetic mean (V) of the electrolytic cell was determined by calculation.

An inverter was attached to the tubing pump, and the frequency was adjusted so that the in-cell linear velocity was 0.015 m/sec.

Even at a high electrical density of 10 kA/m², both of the anode and the cathode had good gas-liquid separation, gas was discharged from the discharge header provided on the vertical upper side, and the electrolyte was discharged from the discharge header provided on the vertical lower side. Further, the temperature of the outlet side electrolyte measured by the outlet side thermometer 82 was 90°C, which was lower than the heat resistant temperature of the membrane.

### (Example 2)

The bipolar electrolyzer was produced in the same manner as in Example 1 except that a bipolar element having a rib height of 14 mm for each of the anode compartment and the cathode compartment and a thickness of the bipolar element of 35 mm was used. The frequency was adjusted so that the in-cell linear velocity was 0.007 m/sec.

Even at a high electrical density of 10 kA/m², both of the anode and the cathode had good gas-liquid separation, gas was discharged from the discharge header provided on the vertical upper side, and the electrolyte was discharged from the discharge header provided on the vertical lower side.

The temperature of the outlet side electrolyte was 90°C, which was lower than the heat resistant temperature of the membrane.

### (Example 3)

The bipolar electrolyzer was produced in the same manner as in Example 1 except that the distance h between the vertical center of the discharge port on the vertical lower side and the vertical center of the vertical cross section of the electrolyte collecting pipe was set at 300 mm. The frequency was adjusted so that the in-cell linear velocity was 0.015 m/sec.

Even at a high electrical density of 10 kA/m², both of the anode and the cathode had good gas-liquid separation, gas was discharged from the discharge header provided on the vertical upper side, and the electrolyte was discharged from the discharge header provided on the vertical lower side.

The temperature of the outlet side electrolyte was 90°C, which was lower than the heat resistant temperature of the membrane.

### (Example 4)

The bipolar electrolyzer was produced in the same manner as in Example 1 except that the distance h between the vertical center of the discharge port on the vertical lower side and the vertical center of the vertical cross section of the electrolyte collecting pipe was set at 1200 mm. The frequency was adjusted so that the in-cell linear velocity was 0.015 m/sec.

Even at a high electrical density of 10 kA/m², both of the anode and the cathode had good gas-liquid separation, gas was discharged from the discharge header provided on the vertical upper side, and the electrolyte was discharged from the discharge header provided on the vertical lower side.

The temperature of the outlet side electrolyte was 90°C, which was lower than the heat resistant temperature of the membrane.

### (Example 5)

The bipolar electrolyzer was produced in the same manner as in Example 1 except that in the headers (anode inlet header, anode outlet header, cathode inlet header, cathode outlet header) provided beside the outer frame, the inner diameter of the discharge port was set at ϕ 4 mm, and the cross-sectional area of the discharge port was adjusted to 1.26 × 10⁻⁵ m². The frequency was adjusted so that the in-cell linear velocity was 0.015 m/sec.

Even at a high electrical density of 10 kA/m², both of the anode and the cathode had good gas-liquid separation, gas was discharged from the discharge header provided on the vertical upper side, and the electrolyte was discharged from the discharge header provided on the vertical lower side.

The temperature of the outlet side electrolyte was 90°C, which was lower than the heat resistant temperature of the membrane.

### (Example 6)

The bipolar electrolyzer was produced in the same manner as in Example 1 except that the distance h between the vertical center of the discharge port on the vertical lower side and the vertical center of the vertical cross section of the electrolyte collecting pipe was set at 100 mm. The frequency was adjusted so that the in-cell linear velocity was 0.015 m/sec.

Even at a high electrical density of 10 kA/m², both of the anode and the cathode had good gas-liquid separation. Gas was discharged from the discharge header provided on the vertical upper side, and the electrolyte was mainly discharged from a discharge header provided on the vertical lower side although a very small amount of gas was mixed. No pulsation was seen.

The temperature of the outlet side electrolyte was 90°C, which was lower than the heat resistant temperature of the membrane.

### (Example 7)

The bipolar electrolyzer was produced in the same manner as in Example 2 except that the inclinations θ2 of the electrolyte outlet discharge ports 5co and 5ao were connected at -90°, the inclinations θ4 of the electrolyte outlet headers 10Oao and 10Oco were connected at 0°, the inclinations θ1 of the electrolytic gas outlet discharge ports 5cgo and 5ago were connected at 90°, and the inclinations Θ3 of the electrolytic gas outlet headers 10Oago and 10Ocgo were connected at 0°. The frequency was adjusted so that the in-cell linear velocity was 0.007 m/sec.

Compared with Example 2, the gas-liquid separation was slightly deteriorated, and the electrolyte flowed into the gas discharge port provided on the upper side. However, no pulsation was generated in the electrolyte flow.

### (Comparative Example 1)

The bipolar electrolyzer was produced in the same manner as in Example 1 except that the discharge port on the vertical upper side was not provided. The frequency was adjusted so that the in-cell linear velocity was 0.015 m/sec.

The gas-liquid separation at the discharge port was deteriorated, and pulsation due to the mixed phase flow of the electrolyte and the electrolytic gas was vigorously generated in the outlet hose.

### (Comparative Example 2)

The bipolar electrolyzer was produced in the same manner as in Example 2 except that the discharge port on the vertical upper side was not provided. The frequency was adjusted so that the in-cell linear velocity was 0.007 m/sec.

**Table 1**

| | | | Example 1 | Example 2 | Example 3 | Example 4 | Example 5 | Example 6 | Example 7 | Comparative Example 1 | Comparative Example 2 |
|---|---|---|---|---|---|---|---|---|---|---|---|
| Electrolysis device | Number of discharge port | Number | 2 | 2 | 2 | 2 | 2 | 2 | 2 | 1 | 1 |
| | Rib height | mm | 7 | 14 | 7 | 7 | 7 | 7 | 14 | 7 | 14 |
| | Thickness of bipolar element (T) | mm | 21 | 35 | 21 | 21 | 21 | 21 | 35 | 21 | 35 |
| | Inner diameter of discharge port (D) | mm | 6 | 6 | 6 | 6 | 4 | 6 | 6 | 6 | 6 |
| | Cross-sectional area of discharge port | m² | 2.83 × 10⁻⁵ | 2.83 × 10⁻⁵ | 2.83 × 10⁻⁵ | 2.83 × 10⁻⁵ | 1.26 × 10⁻⁵ | 2.83 × 10⁻⁵ | 2.83 × 10⁻⁵ | 2.83 × 10⁻⁵ | 2.83 × 10⁻⁵ |
| | D/T | - | 0.29 | 0.17 | 0.29 | 0.29 | 0.19 | 0.29 | 0.17 | 0.29 | 0.17 |
| | Distance between center of discharge port and center of electrolyte collecting pipe | mm | 600 | 600 | 300 | 1200 | 600 | 100 | 600 | 600 | 600 |
| | Inclination θ3 of hose of upper discharge port | ° | 45 | 45 | 45 | 45 | 45 | 45 | 0 | 45 | - |
| | Inclination θ4 of hose of lower discharge port | ° | -45 | -45 | -45 | -45 | -45 | -45 | 0 | -45 | -45 |
| Electrolysis condition | In-cell linear velocity | m/sec | 0.015 | 0.007 | 0.015 | 0.015 | 0.015 | 0.015 | 0.007 | 0.015 | 0.007 |
| | Current density | kA/m² | 10 | 10 | 10 | 10 | 10 | 10 | 10 | 10 | 10 |
| Evaluation | Pulsation on discharge side | - | No | No | No | No | No | No | No | Yes | Yes |
| | Gas-liquid separation | - | Favorable | Favorable | Favorable | Favorable | Favorable | A little gas mixed in liquid phase | Intermittent multiphase flow but no pulsation | Multiphase flow and pulsation | Multiphase flow and pulsation |
| | Temperatures of inlet side electrolyte | °C | 80 | 80 | 80 | 80 | 80 | 80 | 80 | 80 | 80 |
| | Temperatures of outlet side electrolyte | °C | 90 | 90 | 90 | 90 | 90 | 90 | 90 | 90 | 90 |
| | Withstand voltage | V | 1.95 | 1.95 | 1.95 | 1.95 | 1.95 | 1.95 | 1.95 | 1.95 | 1.95 |

### REFERENCE SIGNS LIST

1 Partition wall
2 Electrode
2a Anode
2c Cathode
2e Conductive elastic body
2r Current collector
3 Outer frame
4 Membrane
5 Electrode compartment
5a Anode compartment
5c Cathode compartment
5i Electrolyte inlet
5ai Anode electrolyte inlet
5ao Anode electrolyte outlet
5ago Anode electrolyte inlet
5ci Cathode electrolyte inlet
5co Cathode electrolyte outlet
5cgo Cathode electrolyte outlet
6 Flow rectifier
6a Anode flow rectifier (anode rib)
6c Cathode flow rectifier (cathode rib)
7 Gasket
10O Outer header
10Oai Anode inlet header (anode inlet side hose)
10Oao Anode outlet header (anode outlet side hose)
10Oago Anode outlet header (anode outlet side hose)
10Oci cathode inlet header (cathode inlet side hose)
10Oco cathode outlet header (cathode outlet side hose)
10Ocgo cathode outlet header (cathode outlet side hose)
20Oai Anode distributing pipe
20Oao Anode collecting pipe
20Oci Cathode distributing pipe
20Oco Cathode collecting pipe
20h Centers of cross section of collecting pipe
50 Bipolar electrolyzer
51g Fast head, loose head
51a Anode terminal element
51c Cathode terminal element
51r Tie rod
60 Bipolar element
60a Region A
60b Region B
65 Electrolysis cell
70 Electrolysis device
71 Tubing pump
72 Gas-liquid separation tank
72h Hydrogen separation tank
72o Oxygen separation tank
73 Water replenisher
74 Rectifier
75 Oxygen concentration meter
76 Hydrogen concentration meter
77 Flow meter
78 Pressure gauge
79 Heat exchanger
80 Pressure control valve
81 Inlet side thermometer
82 Outlet side thermometer
D1 Given direction along partition wall
Z Zero-gap structure
θ1 Inclination of discharge port at highest position in vertical direction
θ2 Inclination of discharge port at lowest position in vertical direction
Θ3 Inclination of hose at discharge port at highest position in vertical direction
θ4 Inclination of hose at discharge port at lowest position in vertical direction
h Distance between vertical center of discharge port at lowest position in vertical direction and vertical center of vertical cross section of electrolyte collecting pipe

## Claims

1. An outer header type bipolar electrolyzer (50) comprising an outer header type bipolar element (60), said bipolar element (60) comprising: electrodes including an anode (2a) and a cathode (2c); and a partition wall (1) that separates the cathode (2c) and the anode (2a);
wherein said bipolar element (60) has a plurality of the discharge ports in a region sandwiched between the anode (2a) or the cathode (2c) and the partition wall (1) that discharge an electrolyte containing gas generated at the electrode, **characterized in that**
the discharge ports and an electrolyte collecting pipe are connected through a hose;
the hose extending from the discharge port at the highest position in the vertical direction is connected to the electrolyte collecting pipe vertically above the center of the cross section of the electrolyte collecting pipe; and
the hose extending from the discharge port at the lowest position in the vertical direction is connected to the electrolyte collecting pipe vertically below the center of the cross section of the electrolyte collecting pipe.

2. The bipolar electrolyzer (50) according to claim 1, wherein the plurality of the discharge ports are provided at different positions in the vertical direction in the region.

3. The bipolar electrolyzer (50) according to claim 1 or 2, wherein two discharge ports are provided in each of a region A sandwiched between the anode (2a) and the partition wall (1) and a region B sandwiched between the cathode (2c) and the partition wall (1).

4. The bipolar electrolyzer (50) according to any one of claims 1 to 3, wherein the plurality of the discharge ports are provided at different positions in the vertical direction in a region A sandwiched between the anode (2a) and the partition wall (1) and/or a region B sandwiched between the cathode (2c) and the partition wall (1); and the discharge port at the highest position in the vertical direction is a discharge port that discharges a larger amount of gas than the amount of gas discharged from the discharge port at the lowest position in the vertical direction.

5. The bipolar electrolyzer (50) according to any one of claims 1 to 4, wherein
the plurality of the discharge ports are provided at different positions in the vertical direction in the region; and
in the discharge port at the highest position in the vertical direction, the inclination of the discharge port is 0° or more and 90° or less in the vertical direction with respect to the horizontal direction, and in the discharge port at the lowest position in the vertical direction, the inclination of the discharge port is -90° or more and -10° or less in the vertical direction with respect to the horizontal direction.

6. The bipolar electrolyzer (50) according to any one of claims 1 to 5, wherein the thickness of the bipolar element (60) is 15 mm or more and 40 mm or less.

7. The bipolar electrolyzer (50) according to any one of claims 1 to 6, wherein the cross-sectional area of the discharge ports is 1.25 × 10⁻⁵ m² or more.

8. The bipolar electrolyzer (50) according to any one of claims 1 to 7, wherein the inner diameter D (mm) of the discharge ports and the thickness T (mm) of the bipolar element (60) satisfy a relationship of 0.1≤D/T≤0.9.

9. The bipolar electrolyzer (50) according to any one of claims 1 to 8, wherein
in the discharge port at the highest position in the vertical direction, the inclination of the hose at the discharge port is 0° or more and less than 90° in the vertical direction with respect to the horizontal direction, and in the discharge port at the lowest position in the vertical direction, the inclination of the hose at the discharge port is more than -90° and -10° or less in the vertical direction with respect to the horizontal direction.

10. The bipolar electrolyzer (50) according to any one of claims 1 to 9, wherein
the electrolyte collecting pipe is provided vertically below the discharge ports.

11. The bipolar electrolyzer (50) according to any one of claims 1 to 10, wherein
the hose has a mechanism in which a gas layer is formed in the hose after the flow of the electrolyte stops.

12. The bipolar electrolyzer (50) according to any one of claims 1 to 11, wherein
the electrical resistivity of the hose is 1 MΩ·cm or more.

13. The bipolar electrolyzer (50) according to any one of claims 1 to 12, wherein
the hose is a hose the inside of which is visible from the outside.

14. A hydrogen production method, the method comprising electrolyzing water containing an alkali in the electrolyzer as defined in anyone of claims 1 to 13 to produce hydrogen.

## Patentansprüche

1. Bipolarer Elektrolyseur des Typs mit externem Sammler (50), umfassend ein bipolares Element des Typs mit externem Sammler (60), wobei das bipolare Element (60) umfasst: Elektroden einschließlich einer Anode (2a) und einer Kathode (2c); und eine Trennwand (1), die die Kathode (2c) und die Anode (2a) voneinander trennt;
wobei das bipolare Element (60) in einem Bereich, der sich zwischen der Anode (2a) oder Kathode (2c) und der Trennwand (1) befindet, eine Vielzahl der Austragsanschlüsse aufweist, die einen Elektrolyten, der an der Elektrode erzeugtes Gas enthält, austragen, **dadurch gekennzeichnet, dass**
die Austragsanschlüsse und ein Elektrolytsammelrohr durch einen Schlauch miteinander verbunden sind;
der Schlauch, der sich von dem Austragsanschluss in der in vertikaler Richtung höchsten Position aus erstreckt, vertikal über der Mitte des Querschnitts des Elektrolytsammelrohrs mit dem Elektrolytsammelrohr verbunden ist; und
der Schlauch, der sich von dem Austragsanschluss in der in vertikaler Richtung niedrigsten Position aus erstreckt, vertikal unter der Mitte des Querschnitts des Elektrolytsammelrohrs mit dem Elektrolytsammelrohr verbunden ist.

2. Bipolarer Elektrolyseur (50) gemäß Anspruch 1, wobei sich die Vielzahl der Austragsanschlüsse in verschiedenen Positionen in der vertikalen Richtung in dem Bereich befinden.

3. Bipolarer Elektrolyseur (50) gemäß Anspruch 1 oder 2, wobei sich zwei Austragsanschlüsse jeweils in einem Bereich A, der sich zwischen der Anode (2a) und der Trennwand (1) befindet, und einem Bereich B, der sich zwischen der Kathode (2c) und der Trennwand (1) befindet, befinden.

4. Bipolarer Elektrolyseur (50) gemäß einem der Ansprüche 1 bis 3, wobei sich die Vielzahl der Austragsanschlüsse in verschiedenen Positionen in der vertikalen Richtung in einem Bereich A, der sich zwischen der Anode (2a) und der Trennwand (1) befindet, und/oder einem Bereich B, der sich zwischen der Kathode (2c) und der Trennwand (1) befindet, befinden; und der Austragsanschluss in der in vertikaler Richtung höchsten Position ein Austragsanschluss ist, der eine größere Menge Gas austrägt als der Austragsanschluss in der in vertikaler Richtung niedrigsten Position.

5. Bipolarer Elektrolyseur (50) gemäß einem der Ansprüche 1 bis 4, wobei
sich die Vielzahl der Austragsanschlüsse in verschiedenen Positionen in der vertikalen Richtung in dem Bereich befinden; und
bei dem Austragsanschluss in der in vertikaler Richtung höchsten Position die Neigung des Austragsanschlusses in der vertikalen Richtung in Bezug auf die horizontale Richtung 0° oder mehr und 90° oder weniger beträgt und bei dem Austragsanschluss in der in vertikaler Richtung niedrigsten Position die Neigung des Austragsanschlusses in der vertikalen Richtung in Bezug auf die horizontale Richtung -90° oder mehr und -10° oder weniger beträgt.

6. Bipolarer Elektrolyseur (50) gemäß einem der Ansprüche 1 bis 5, wobei die Dicke des bipolaren Elements (60) 15 mm oder mehr und 40 mm oder weniger beträgt.

7. Bipolarer Elektrolyseur (50) gemäß einem der Ansprüche 1 bis 6, wobei die Querschnittsfläche der Austragsanschlüsse 1,25 × 10⁻⁵ m² oder mehr beträgt.

8. Bipolarer Elektrolyseur (50) gemäß einem der Ansprüche 1 bis 7, wobei der innere Durchmesser D (mm) der Austragsanschlüsse und die Dicke T (mm) des bipolaren Elements (60) der Beziehung 0,1≤D/T≤0,9 genügen.

9. Bipolarer Elektrolyseur (50) gemäß einem der Ansprüche 1 bis 8, wobei
bei dem Austragsanschluss in der in vertikaler Richtung höchsten Position die Neigung des Schlauchs am Austragsanschluss in der vertikalen Richtung in Bezug auf die horizontale Richtung 0° oder mehr und weniger als 90° beträgt und bei dem Austragsanschluss in der in vertikaler Richtung niedrigsten Position die Neigung des Schlauchs am Austragsanschluss in der vertikalen Richtung in Bezug auf die horizontale Richtung mehr als -90° und -10° oder weniger beträgt.

10. Bipolarer Elektrolyseur (50) gemäß einem der Ansprüche 1 bis 9, wobei
sich das Elektrolytsammelrohr vertikal unter den Austragsanschlüssen befindet.

11. Bipolarer Elektrolyseur (50) gemäß einem der Ansprüche 1 bis 10, wobei
der Schlauch einen Mechanismus aufweist, bei dem in dem Schlauch eine Gasschicht entsteht, nachdem die Strömung des Elektrolyten aufgehört hat.

12. Bipolarer Elektrolyseur (50) gemäß einem der Ansprüche 1 bis 11, wobei
der spezifische elektrische Widerstand des Schlauchs 1 MΩ·cm oder mehr beträgt.

13. Bipolarer Elektrolyseur (50) gemäß einem der Ansprüche 1 bis 12, wobei
der Schlauch ein Schlauch ist, dessen Inneres von außen sichtbar ist.

14. Wasserstoffproduktionsverfahren, wobei das Verfahren das Elektrolysieren von Wasser, das eine Base enthält, in dem Elektrolyseur gemäß einem der Ansprüche 1 bis 13 unter Bildung von Wasserstoff umfasst.

## Revendications

1. Electrolyseur bipolaire du type collecteur externe (50) comprenant un élément bipolaire du type collecteur externe (60), ledit élément bipolaire (60) comprenant : des électrodes englobant une anode (2a) et une cathode (2c) ; et une paroi de séparation (1) qui sépare la cathode (2c) et l'anode (2a) ;
dans lequel ledit élément bipolaire (60) a une pluralité d'orifices de décharge dans une région prise en sandwich entre l'anode (2a) ou la cathode (2c) et la paroi de séparation (1) qui déchargent un électrolyte contenant un gaz généré au niveau de l'électrode, **caractérisé en ce que**
les orifices de décharge et une conduite collectrice d'électrolyte sont connectés par l'intermédiaire d'un tuyau ;
le tuyau s'étendant depuis l'orifice de décharge à la position la plus élevée dans la direction verticale est connecté à la conduite collectrice d'électrolyte verticalement au-dessus du centre de la section transversale de la conduite collectrice d'électrolyte ; et
le tuyau s'étendant depuis l'orifice de décharge à la position la plus basse dans la direction verticale est connecté à la conduite collectrice d'électrolyte verticalement sous le centre de la section transversale de la conduite collectrice d'électrolyte.

2. Electrolyseur bipolaire (50) selon la revendication 1, dans lequel les plusieurs orifices de décharge sont disposés à des positions différentes dans la direction verticale dans la région.

3. Electrolyseur bipolaire (50) selon la revendication 1 ou 2, dans lequel deux orifices de décharge sont disposés dans chacune parmi une région A prise en sandwich entre l'anode (2a) et la paroi de séparation (1) et une région B prise en sandwich entre la cathode (2c) et la paroi de séparation (1).

4. Electrolyseur bipolaire (50) selon l'une quelconque des revendications 1 à 3, dans lequel les plusieurs orifices de décharge sont disposés à des positions différentes dans la direction verticale dans une région A prise en sandwich entre l'anode (2a) et la paroi de séparation (1) et/ou une région B prise en sandwich entre la cathode (2c) et la paroi de séparation (1) ; et l'orifice de décharge à la position la plus élevée dans la direction verticale est un orifice de décharge qui décharge une quantité de gaz supérieure à la quantité de gaz déchargée par l'orifice de décharge à la position la plus basse dans la direction verticale.

5. Electrolyseur bipolaire (50) selon l'une quelconque des revendications 1 à 4, dans lequel
les plusieurs orifices de décharge sont disposés à des positions différentes dans la direction verticale de la région ; et
dans l'orifice de décharge à la position la plus élevée dans la direction verticale, l'inclinaison de l'orifice de décharge est de 0° ou plus et 90° ou moins dans la direction verticale par rapport à la direction horizontale, et dans l'orifice de décharge à la position la plus basse dans la direction verticale, l'inclinaison de l'orifice de décharge est de -90° ou plus et -10° ou moins dans la direction verticale par rapport à la direction horizontale.

6. Electrolyseur bipolaire (50) selon l'une quelconque des revendications 1 à 5, dans lequel l'épaisseur de l'élément bipolaire (60) est de 15 mm ou plus et 40 mm ou moins.

7. Electrolyseur bipolaire (50) selon l'une quelconque des revendications 1 à 6, dans lequel la superficie en coupe transversale des orifices de décharge est de 1,25 × 10⁻⁵ m² ou plus.

8. Electrolyseur bipolaire (50) selon l'une quelconque des revendications 1 à 7, dans lequel le diamètre intérieur D (mm) des orifices de décharge et l'épaisseur T (mm) de l'élément bipolaire (60) satisfont à la relation 0,1 ≤ D/T ≤ 0,9.

9. Electrolyseur bipolaire (50) selon l'une quelconque des revendications 1 à 8, dans lequel
dans l'orifice de décharge à la position la plus élevée dans la direction verticale, l'inclinaison du tuyau au niveau de l'orifice de décharge est de 0° ou plus et inférieur à 90° dans la direction verticale par rapport à la direction horizontale, et dans l'orifice de décharge à la position la plus basse dans la direction verticale, l'inclinaison du tuyau au niveau de l'orifice de décharge est supérieur à -90° et de -10° ou moins dans la direction verticale par rapport à la direction horizontale.

10. Electrolyseur bipolaire (50) selon l'une quelconque des revendications 1 à 9, dans lequel la conduite collectrice d'électrolyte est disposée verticalement sous les orifices de décharge.

11. Electrolyseur bipolaire (50) selon l'une quelconque des revendications 1 à 10, dans lequel le tuyau a un mécanisme dans lequel une couche de gaz est formée dans le tuyau après que l'écoulement de l'électrolyte a cessé.

12. Electrolyseur bipolaire (50) selon l'une quelconque des revendications 1 à 11, dans lequel la résistivité électrique du tuyau est de 1 MΩ•cm ou plus.

13. Electrolyseur bipolaire (50) selon l'une quelconque des revendications 1 à 12, dans lequel le tuyau est un tuyau dont l'intérieur est visible depuis l'extérieur.

14. Procédé de production d'hydrogène, le procédé comprenant l'électrolyse d'eau contenant un alcali dans l'électrolyseur tel que défini dans l'une quelconque des revendications 1 à 13 pour produire de l'hydrogène.
